# EUROPÄISCHE PATENTANMELDUNG

(11) **EP 1 985 911 A1**
(43) Veröffentlichungstag der Anmeldung: **29.10.2008**
(21) Anmeldenummer: 07405130.1
(22) Anmeldetag: 27.04.2007
(51) Int. Cl.: F21S 6/00, F21V 21/26

(54) **Leuchte mit einstellbarem Arm**

(71) Anmelder: Belux IP AG, 4132 Muttenz (CH)
(72) Erfinder: Richter, Volker, 4103 Bottmingen (CH)
(74) Vertreter: Ullrich, Gerhard

(57) **Zusammenfassung**

Die Leuchte hat einen einstellbaren Arm, der aus einem unteren und einem oberen Rohr (6,7) besteht und in dem eine Federanordnung (8) integriert ist, welche den Arm in Balance hält. Die Federanordnung (8) besteht aus einer ersten Feder (84) mit einer ersten Federkonstanten und einer mit der ersten Feder (84) in Reihe geschalteten zweiten Feder (82) mit einer zweiten Federkonstanten. Beide Federn (84,82) sind in einem ersten Kanal (61) des unteren Rohrs (6) untergebracht.

## Beschreibung

### Anwendungsgebiet der Erfindung

Die Erfindung betrifft eine Leuchte mit einem zweiteiligen Arm, dessen Streben sich einzeln in der Neigung über weite Schwenkbereiche mittels Gelenken verstellen lassen. Vorteilhaft kann man die auf einem Fuss ruhende Leuchte zusätzlich um eine Vertikalachse bewegen. Solche Leuchten erlauben quasi sämtliche Positionen der Lichtquelle zwischen nahe an den zu beleuchtenden Bereich herangezogen, relativ hoch darüber eingestellt und z.B. gänzlich aus einem Arbeitsbereich herausgeschenkt.

### Stand der Technik

Die DE 1 489 478 A beschreibt eine Trägervorrichtung für Beleuchtungsarmaturen, wobei der Träger ein aus von mehreren Segmenten zusammengesetzter Arm mit verstellbaren Gelenken ist, der in jede gewünschte Lage geschwenkt werden kann. Die einzelnen Segmente bestehen aus einem äusseren und einem inneren Rohrelement von jeweils rechteckigem Querschnitt. Jedes Segment besitzt am Ende eine Gelenkschale, wobei die daran offenen Seiten einander jeweils zugewandt sind, quasi um 180° gegeneinander versetzt. In den Gelenkschalen ist je eine Führungsbuchse eingelassen, in die das entsprechende innere Rohrelement ragt. Die Führungsbuchsen sind mit einem Kegelradzahnkranz versehen. Zwischen dem äusseren und dem inneren Rohrelement ist eine Ausgleichsfedervorrichtung zur Erzeugung einer Kraft vorhanden, die bei einer Drehung der Rohrelemente im Verhältnis zueinander die Rohrelemente in ihre Ausgangslage zurückzuführen versucht. Innerhalb der Gelenkschalen, quasi zwischen den einzelnen Segmenten, ist ein Ritzel angeordnet, das in Eingriff mit den Kegelradzahnkränzen beider benachbarter Führungsbuchsen ist. Die Gelenkschalen und das Ritzel werden von einer Welle durchragt und stehen mit den Kegelradzahnkränzen unter Spannung. Dadurch wird im Gelenk eine Reibung erzeugt, die zur Beibehaltung der Segmente in ihrer einmal eingenommenen Lage ausreicht. Das elektrische Kabel verläuft innerhalb der Rohrelemente sowie der Gelenke. Durch die in den Gelenkschalen angeordneten Kegelradzahnkränze und dem damit in Eingriff stehenden Ritzel ist die Konstruktion aufwendig und damit teuer. Die Kabelführung, beginnend im inneren Rohrelement, weiter durch die Gelenkschalen, um die Welle, durch die Kegelradzahnkränze und schliesslich das Ritzel, verursacht einen hohen Montageaufwand.

Eine ausbalancierte Tragarmanordnung ist aus der DE 38 16 023 A1 bekannt. Die Anordnung besitzt im wesentlichen einen Arm, ein Gelenkteil und dazwischen ein Armparallelogramm, das mit dem Arm und Gelenkteil verbunden ist. Das Armparallelogramm besteht aus einer Stange und einer Gasfedereinrichtung, wobei sich die Gasfedereinrichtung aus einer Gasdruckfeder und einer Kolbenstange zusammensetzt. Die Stange und die Gasfedereinrichtung sind an einer Seite mit dem Arm und an der gegenüberliegenden Seite mit dem Gelenkteil schwenkbar verbunden. Durch das Armparallelogramm ändert sich die Federkraft der Gasfedereinrichtung proportional zum Hub. Die Gasfeder kann als Gasdruck- oder als Gaszugfeder ausgebildet sein. Die Anordnung ist durch den Einsatz der Gasfedereinrichtung technisch aufwendig und somit teuer.

In der DE 87 00 986 U1 wird eine Gestängeleuchte mit Federentlastung und einem Leuchtengehäuse, das an einem Leuchtenarm befestigt ist, offenbart. Ein erstes Schwenkgelenk ist zwischen dem Leuchtengehäuse und dem Leuchtenarm positioniert. Über ein zweites Schwenkgelenk ist der Leuchtenarm mit dem Standfuss verbunden. Ein drittes Schwenkgelenk ist zwischen dem Standfuss und einem Befestigungsteil vorgesehen. Mit Hilfe einer Flügelschraube können alle Schwenkgelenke in jeder gewünschten Lage festgesetzt werden. An das zweite Schwenkgelenk, zwischen Leuchtenarm und Standfuss, sind zwei gegenüberliegende Blechteile angesetzt, die an ihrem jeweiligen einem Ende durch einen Bolzen miteinander verbunden sind. Zusammen bilden die Blechteile eine Hülse, die zur Aufnahme einer der Entlastung des Leuchtenarms dienenden Zugfeder dient. Die Zugfeder ist mit einem Ende in den Bolzen eingehängt. Mit dem gegenüberliegenden Ende ist die Zugfeder in ein Stahlband eingehängt, das mit einer Schraube am zweiten Schwenkgelenk befestigt ist und sich beim Drehen des Schwenkgelenks gegen dessen Zylinderfläche anlegt. Ausser der Hülse mit der darin aufgenommen Zugfeder kann im unteren Teil des Standfusses ein für den Betrieb einer Leuchtstoffröhre erforderliches Vorschaltgerät untergebracht sein.

In der DE 202 18 964 U1 ist eine verstellbare Beleuchtungseinheit mit Ausgleichs- und Kabelaufnahmevorrichtungen gezeigt. Die Kabelaufnahmevorrichtungen bilden jeweils eine erste und zweite, einstückige Tragstange aus. Die Ausgleichsvorrichtungen besitzen ein erstes und zweites Gelenk, ausserdem ein erstes und zweites Seil, sowie ein erstes und zweites Federelement. Weiterhin hat die Beleuchtungseinheit einen Lampenkopf und ein Basisteil. Das erste Gelenk ist zwischen der ersten Tragstange und dem Basisteil montiert und setzt sich aus einem Basisbefestigungsarm, einem ersten Schwenkteil sowie einem ersten Verbindungsarm zusammen, wobei alle Teile mittels eines ersten Verbindungselements schwenkbar miteinander verbunden sind. Ein Ende des ersten Seils ist am ersten Schwenkteil und das gegenüberliegende Ende am ersten Federelement befestigt. Das zweite Gelenk sitzt zwischen erster und zweiter Tragstange und besteht aus einem zweiten Verbindungsarm, einem zweiten Schwenkteil und einem dritten Verbindungsarm. Alle Teile sind durch ein zweites Verbindungselements schwenkbar miteinander verbunden. Der zweite Verbindungsarm ist am ersten Federelement befestigt. Ein Ende des zweiten Seils ist am zweiten Schwenkteil und das gegenüberliegende Ende am zweiten Federelement befestigt. Zwischen dem ersten und dem zweiten Gelenk ist eine Verbindungsstange vorgesehen. Der Lampenkopf ist über ein Lampenverbindungsteil, an dem das freie Ende des zweiten Elastikelements fixiert ist, mit dem Ende der zweiten Tragstange verbunden.

### Aufgabe der Erfindung

Angesichts der bisherigen Nachteile bekannter Konstruktionen liegt der Erfindung die Aufgabe zugrunde, eine Mechanik für eine Leuchte mit einem zweiteiligen Arm, dessen Streben sich einzeln in der Neigung mittels Gelenken verstellen lassen, vorzuschlagen, wobei die Mechanik in möglichst geringer Baugrösse weitgehend in den Streben kleinen Querschnitts angeordnet ist und somit nach aussen verborgen bleibt. Für das stabile Verharren einer gewählten Neigungseinstellung sollen mechanische Klemmverbindungen nur eine sekundäre Funktion haben.

Der Benutzer sei davon zu entlasten, sich mit fortwährendem Gebrauch, d.h. durch Bewegen der Armstreben, sukzessive lockernde Klemmverbindungen nachstellen zu müssen. Eine weitere Aufgabe besteht darin, das Kabel zur Stromversorgung möglichst ebenfalls weitgehend unsichtbar anzuordnen. Schliesslich muss sich die Leuchte zu effizienten Kosten in Serie fertigen lassen.

### Übersicht über die Erfindung

Die Leuchte hat einen einstellbaren Arm, der aus einem unteren und einem oberen Rohr besteht und in dem eine Federanordnung integriert ist, welche den Arm in Balance hält. Ein erstes Gelenk ist zwischen einem Fuss und dem unteren Rohr angeordnet, welches über einen ersten Winkel verstellbar ist. Das erste Gelenk hat ein erstes Gelenkteil, das mit dem Fuss verbunden ist, und besitzt ein zweites Gelenkteil, das mit dem unteren Rohr verbunden, wobei beide Gelenkteile ineinander greifen. Ein zweites Gelenk ist zwischen dem unteren Rohr und dem oberen Rohr angeordnet, welches über einen zweiten Winkel verstellbar ist. Dieses zweite Gelenk hat ebenfalls ein erstes Gelenkteil, das mit dem unteren Rohr verbunden ist, und besitzt ein zweites Gelenkteil, das mit dem oberen Rohr verbunden ist, wobei beide Gelenkteile ineinander greifen. Eine Fassung zur Aufnahme eines Leuchtkörpers ist mit dem oberen Rohr verbunden. Von aussen über die Rohre ist ein Stromkabel an die Fassung herangeführt. Die Federanordnung besteht aus einer ersten Feder mit einer ersten Federkonstanten und einer mit der ersten Feder in Reihe geschalteten zweiten Feder mit einer zweiten Federkonstanten. Die erste Federkonstante ist wesentlich grösser als die zweite Federkonstante. Beide Federn sind in einem ersten Kanal des unteren Rohrs untergebracht. Ein zweites Halteelement, welches das auf Seiten der ersten Feder liegende freie Ende der Federanordnung bildet, ist in einem im ersten Gelenkteil des ersten Gelenks vorhandenen Anfangspunkt arretiert. Ein erstes Halteelement, welches das auf Seiten der zweiten Feder liegende freie Ende der Federanordnung bildet, ist in einem im zweiten Gelenkteil des zweiten Gelenks vorhandenen Endpunkt arretiert.

Nachfolgend werden spezielle Ausführungsformen der Erfindung definiert: Die erste Feder wird aus einer Vielzahl von auf einem Achsstab aneinander gereihten, axial komprimierbaren Tellerfedern gebildet. Die zweite Feder ist eine Spiralfeder, welche in einem Kopplungspunkt mit der ersten Feder verbunden ist. Das Stromkabel verläuft untergebracht in einem zweiten Kanal des unteren Rohrs und des oberen Rohrs.

Die erste Feder ist durch auf dem Achsstab eingefügte, axial bewegliche Scheiben in Pakete gegliedert. Die erste Feder hat ein am zweiten Gelenkteil des ersten Gelenks aufsetzendes Zwischenstück, das axial beweglich auf dem Achsstab, an dem Ende der ersten Feder angeordnet ist, welches dem zweiten Halteelement zugewandt ist. Auf Seiten des Zwischenstücks geht der Achsstab in ein zweites Endstück über. Vom zweiten Endstück erstreckt sich ein zweiter Anker, der mit dem zweiten Halteelement endet, und gegenüber dem Zwischenstück geht der Achsstab in ein erstes Endstück über, das ein Anschlussorgan besitzt. Die zweite Feder ist mit ihrem zweiten Anschlussorgan am Kopplungspunkt mit einem Anschlussorgan der ersten Feder verbunden. Gegenüber dem zweiten Anschlussorgan besitzt die zweite Feder ein erstes Anschlussorgan, von dem sich ein erster Anker erstreckt, der mit dem ersten Halteelement endet.

Die beiden Anker bestehen im wesentlichen jeweils aus einem flexiblen Strang, vorzugsweise ein Stahlseil. Das erste Halteelement des ersten Ankers und das zweite Halteelement des zweiten Ankers sind kugelförmig. Der erste Anker besitzt gegenüber seinem ersten Halteelement ein zweites Halteelement mit einem Durchgangsloch, in welches das erste Anschlussorgan der zweiten Feder eingehängt ist. Der zweite Anker besitzt gegenüber seinem zweiten Halteelement ein kugelförmiges erstes Halteelement, welches in ein lateral mündendes Nest des zweiten Endstücks eingehängt ist. Das Anschlussorgan an der ersten Feder ist ösenförmig, in welches das hakenförmige zweite Anschlussorgan der zweiten Feder eingehängt ist. Der Anfangspunkt im ersten Gelenkteil des ersten Gelenks und der Endpunkt im zweiten Gelenkteil des zweiten Gelenks sind jeweils als Nest zur einhängbaren, arretierten Aufnahme des zweiten Halteelements des zweiten Ankers bzw. des ersten Halteelements des ersten Ankers ausgebildet.

Das erste Gelenkteil des ersten Gelenks weist einen Schaft und ein daran ansetzendes Scheibensegment auf. Der Schaft hat einen axial mündenden Hohlraum und das lateral mündende Nest. Das Scheibensegment hat eine radial verlaufende Seilnut, die zur längenveränderlichen Aufnahme des Strangs des zweiten Ankers dient und sich bis in den Schaft hinein zum Nest erstreckt. Das Scheibensegment besitzt ferner ein zentrisches Durchgangsloch.

Das zweite Gelenkteil des ersten Gelenks weist einen Schaft und zwei daran ansetzende Scheibensegmente auf, die zueinander kongruent stehen und zwischen sich einen Freiraum belassen. Durch diesen Schaft verlaufen ein erster und ein zweiter Kanal. Den Scheibensegmenten gegenüberliegend ragt aus dem ersten Kanal ein rohrförmiger Ansatz heraus, in welchem sich der erste Kanal fortsetzt. Durch die Scheibensegmente verläuft ein zentrisches Durchgangsloch. Das erste Gelenkteil steckt drehbeweglich mit seinem Hohlraum auf einem vom Fuss aufragenden Zapfen. Das Scheibensegment des ersten Gelenkteils steckt im Freiraum zwischen den beiden Scheibensegmenten des zweiten Gelenkteils. Beide Gelenkteile sind mittels einer die Durchgangslöcher durchragenden Schraube und zugehöriger Mutter miteinander beweglich verbunden.

Das Scheibensegment des ersten Gelenkteils vom ersten Gelenk hat beidseits um das Durchgangsloch herum eine Vertiefung. Einerseits des Scheibensegments ist eine bogenförmig verlaufende Nut vorhanden. Der aus dem Schaft vom zweiten Gelenkteil herausragende Ansatz steckt im ersten Kanal des unteren Rohrs. Die Scheibensegmente des zweiten Gelenkteils vom ersten Gelenk haben jeweils aussen, um das Durchgangsloch herum, eine Vertiefung, in denen einerseits ein Kopf der Schraube und andererseits ein Scheibensegment der Mutter versenkt ist. In einem der Scheibensegmente des zweiten Gelenkteils ist eine Bohrung vorhanden, um darin ein Arretierelement aufzunehmen, das in die Nut am ersten Gelenkteil die Vorwärtsneigung des unteren Rohrs begrenzend eingreift. Die Rückwärtsneigung des unteren Rohrs wird durch das Aufsitzen einer Schulterfläche am Schaft des zweiten Gelenkteils des ersten Gelenks auf einer Schulterfläche am Schaft des ersten Gelenkteils des ersten Gelenks begrenzt. Im ersten Kanal des zweiten Gelenkteils liegt das zweite Endstück der Federanordnung positionsveränderlich und in seinem zweiten Kanal verläuft das Stromkabel. Das Zwischenstück der Federanordnung sitzt auf der im ersten Kanal des unteren Rohrs befindlichen Ringschulter des Ansatzes auf.

Das erste Gelenkteil des zweiten Gelenks weist einen Schaft und zwei daran ansetzende Scheibensegmente auf, die zueinander kongruent stehen und zwischen sich einen Freiraum belassen. Durch den Schaft verlaufen ein erster und ein zweiter Kanal. Den Scheibensegmenten gegenüberliegend ragt aus dem ersten Kanal ein rohrförmiger Ansatz heraus, in welchem sich der erste Kanal fortsetzt. Durch die Scheibensegmente verläuft ein zentrisches Durchgangsloch. Das zweite Gelenkteil des zweiten Gelenks weist einen Schaft und ein daran ansetzendes Scheibensegment auf, wobei der Schaft das lateral mündende Nest und einen zweiten Kanal hat. Das Scheibensegment hat eine radial verlaufende Seilnut, die zur längenveränderlichen Aufnahme des Strangs des ersten Ankers dient und sich bis in den Schaft hinein zum Nest erstreckt. Das Scheibensegment des zweiten Gelenkteils hat ferner ein zentrisches Durchgangsloch und steckt im Freiraum zwischen den beiden Scheibensegmenten des ersten Gelenkteils. Beide Gelenkteile sind mittels einer die Durchgangslöcher durchragenden Schraube und zugehöriger Mutter miteinander beweglich verbunden.

Das Scheibensegment des zweiten Gelenkteils vom zweiten Gelenk hat beidseits, um das Durchgangsloch herum, eine Vertiefung. Einerseits des Scheibensegments ist eine bogenförmig verlaufende Nut vorhanden. Der aus dem Schaft vom zweiten Gelenkteil herausragende Ansatz steckt im ersten Kanal des oberen Rohrs. Die Scheibensegmente des ersten Gelenkteils vom zweiten Gelenk haben jeweils aussen, um das Durchgangsloch herum, eine Vertiefung, in denen einerseits ein Kopf der Schraube und andererseits ein Scheibensegment der Mutter versenkt ist.

In einem der Scheibensegmente des ersten Gelenkteils ist eine Bohrung vorhanden, um darin ein Arretierelement aufzunehmen, das in die Nut am zweiten Gelenkteil die Vorwärtsneigung des oberen Rohrs begrenzend eingreift. Die Rückwärtsneigung des oberen Rohrs wird durch das Aufsitzen einer Schulterfläche am Schaft des zweiten Gelenkteils des zweiten Gelenks auf einer Schulterfläche am Schaft des ersten Gelenkteils des zweiten Gelenks begrenzt. Im ersten Kanal des ersten Gelenkteils liegt der Strang des ersten Ankers positionsveränderlich und in seinem zweiten Kanal verläuft das Stromkabel, das sich über den zweiten Kanal des zweiten Gelenkteils und den zweiten Kanal des oberen Rohrs fortsetzt.

Ein drittes Gelenk ist zwischen dem oberen Rohr und der Fassung angeordnet. Das dritte Gelenk hat ein erstes Gelenkteil, welches mit dem oberen Rohr verbunden ist, und hat ein zweites Gelenkteil, welches mit der Fassung verbunden ist. Die Fassung ist von einem Schirm umgeben, der über einen Neigungswinkel und in Rotationsrichtung verstellbar ist. Das erste Gelenkteil des dritten Gelenks weist einen Schaft und zwei daran ansetzende Scheibensegmente auf, die zueinander kongruent stehen und zwischen sich eine Kabelnut belassen. Der Schaft hat einen zweiten Kanal. Den Scheibensegmenten gegenüberliegend setzt sich der Schaft mit einem axial erstreckenden rohrförmiger Ansatz fort. Durch die Scheibensegmente verläuft ein zentrisches Durchgangsloch. Die Scheibensegmente des ersten Gelenkteils vom dritten Gelenk haben jeweils aussen, um das Durchgangsloch herum, eine Vertiefung. Das zweite Gelenkteil des dritten Gelenks weist einen Schaft und zwei daran ansetzende Scheibensegmente auf, die zueinander kongruent stehen und zwischen sich einen Freiraum belassen. Der Schaft hat einen zweiten Kanal. Den Scheibensegmenten gegenüberliegend setzt sich der Schaft mit einem axial erstreckenden rohrförmigen Ansatz fort. Durch die Scheibensegmente verläuft ein zentrisches Durchgangsloch. Die Scheibensegmente des zweiten Gelenkteils vom dritten Gelenk haben jeweils aussen, um das Durchgangsloch herum, eine Vertiefung. Die Scheibensegmente des ersten Gelenkteils vom dritten Gelenk stecken im Freiraum zwischen den beiden Scheibensegmenten des zweiten Gelenkteils. Beide Gelenkteile sind mittels einer die Durchgangslöcher durchragenden Schraube und zugehöriger Mutter miteinander beweglich verbunden. In den Vertiefungen an den Scheibensegmenten des zweiten Gelenkteils vom dritten Gelenk ist einerseits ein Kopf der Schraube und andererseits ein Scheibensegment der Mutter versenkt. Im zweiten Kanal des ersten Gelenkteils verläuft das Stromkabel, das die Kabelnut und den Freiraum durchragt und sich über den zweiten Kanal des zweiten Gelenkteils fortsetzt. Am dritten Gelenk ist zur Begrenzung der Verstellung der Fassung in Rotationsrichtung eine Arretierkontur vorhanden.

Die Scheibensegmente der beiden Gelenkteile des zweiten Gelenks haben im Verhältnis zu den Scheibensegmenten der beiden Gelenkteile des ersten Gelenks einen verminderten Durchmesser. Die beiden den Arm der Leuchte bildenden Rohre spannen eine gemeinsame Ebene auf.

### Kurzbeschreibung der beigefügten Zeichnungen

Es zeigen:
- Figur 1A: die erfindungsgemässe Leuchte mit ihrem ersten, zweiten und dritten Gelenk, dem Fuss, dem unteren und oberen Rohr sowie einem Schirm, in einer ersten Stellung, in Seitenansicht;
- Figur 1B: die Leuchte aus Figur 1A, in einer zweiten Stellung, in Seitenansicht;
- Figur 1C: die Leuchte aus Figur 1A, in einer dritten Stellung, in Seitenansicht;
- Figur 1D: die Leuchte aus Figur 1A, in einer vierten Stellung, in Seitenansicht;
- Figur 1E: die Leuchte aus Figur 1A, in einer fünften Stellung, in Seitenansicht;
- Figur 2: den Fuss der Leuchte gemäss Figur 1A, in Perspektivansicht;

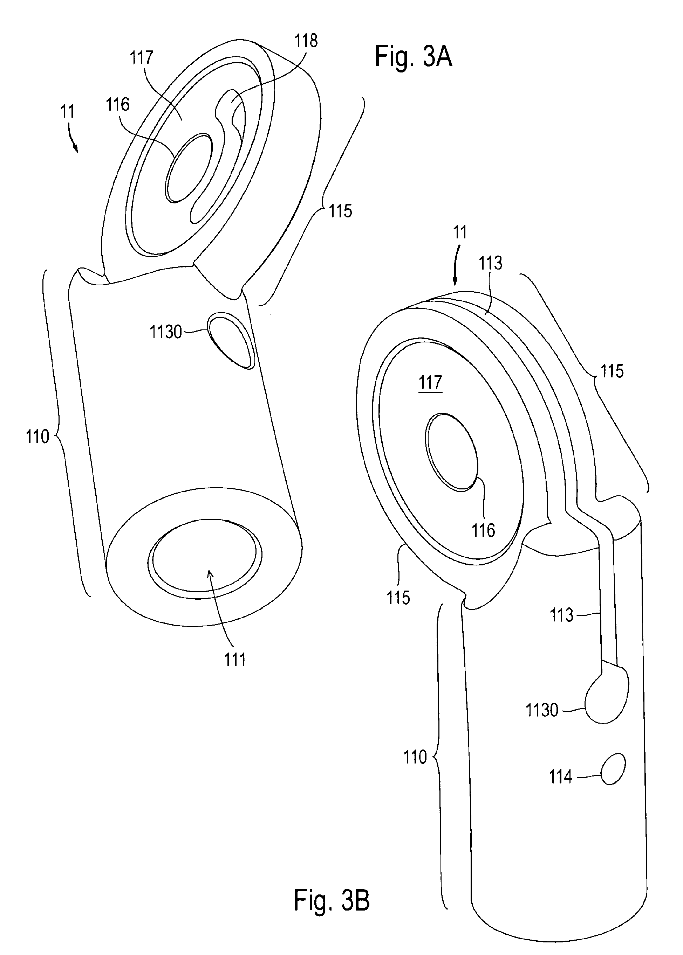

- Figur 3A: das erste Gelenkteil aus dem ersten Gelenk gemäss Figur 1A, in Perspektivansicht;
- Figur 3B: das erste Gelenkteil gemäss Figur 3A, in gewechselter Perspektivansicht;

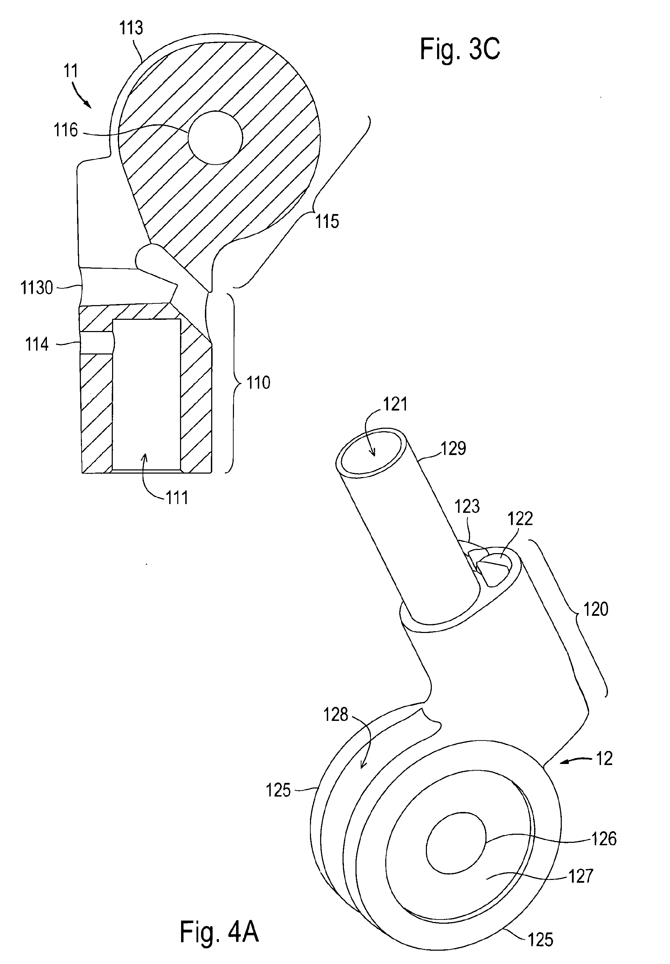

- Figur 3C: das erste Gelenkteil gemäss Figur 3A, im Vertikalschnitt;
- Figur 4A: das zweite Gelenkteil aus dem ersten Gelenk gemäss Figur 1A, in Perspektivansicht;

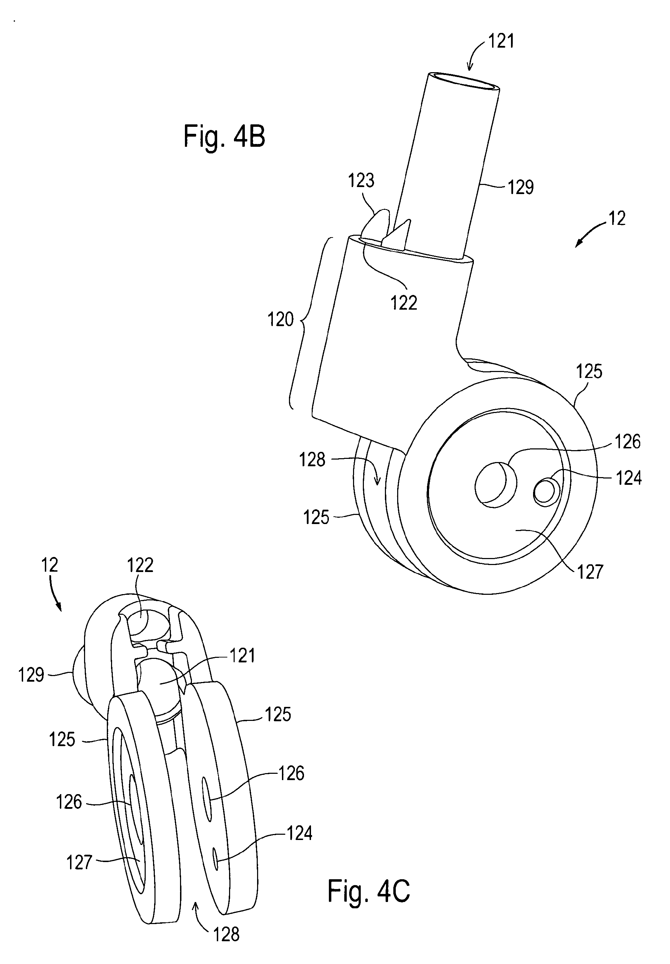

- Figur 4B: das zweite Gelenkteil gemäss Figur 4A, in gewechselter Perspektivansicht;
- Figur 4C: das zweite Gelenkteil gemäss Figur 4B, in erneut gewechselter Perspektivansicht;

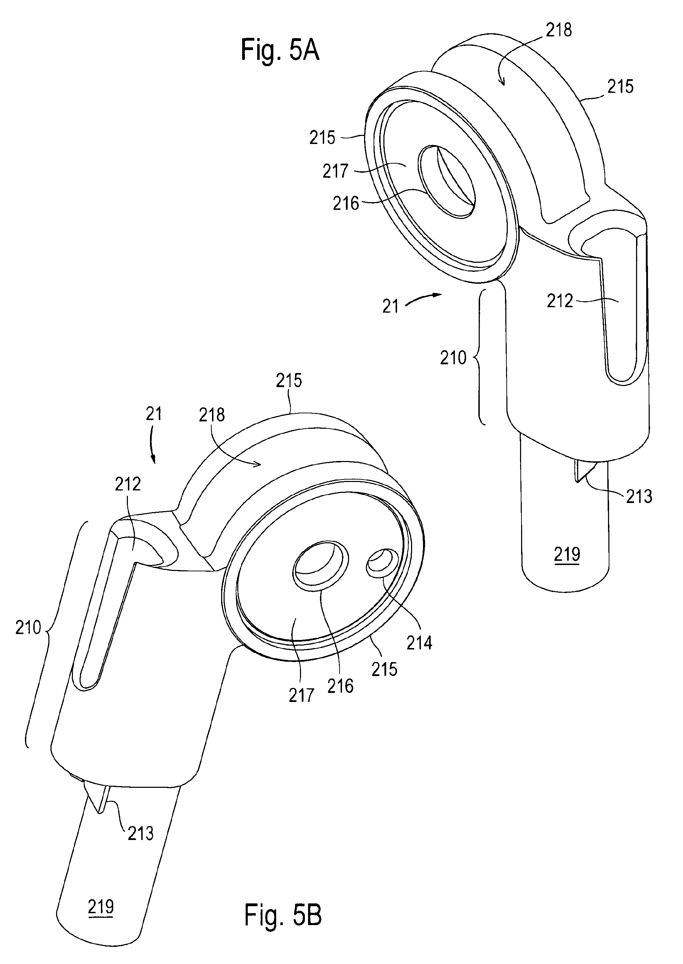

- Figur 5A: das erste Gelenkteil aus dem zweiten Gelenk gemäss Figur 1A, in Perspektivansicht;
- Figur 5B: das erste Gelenkteil gemäss Figur 5A, in gewechselter Perspektivansicht;

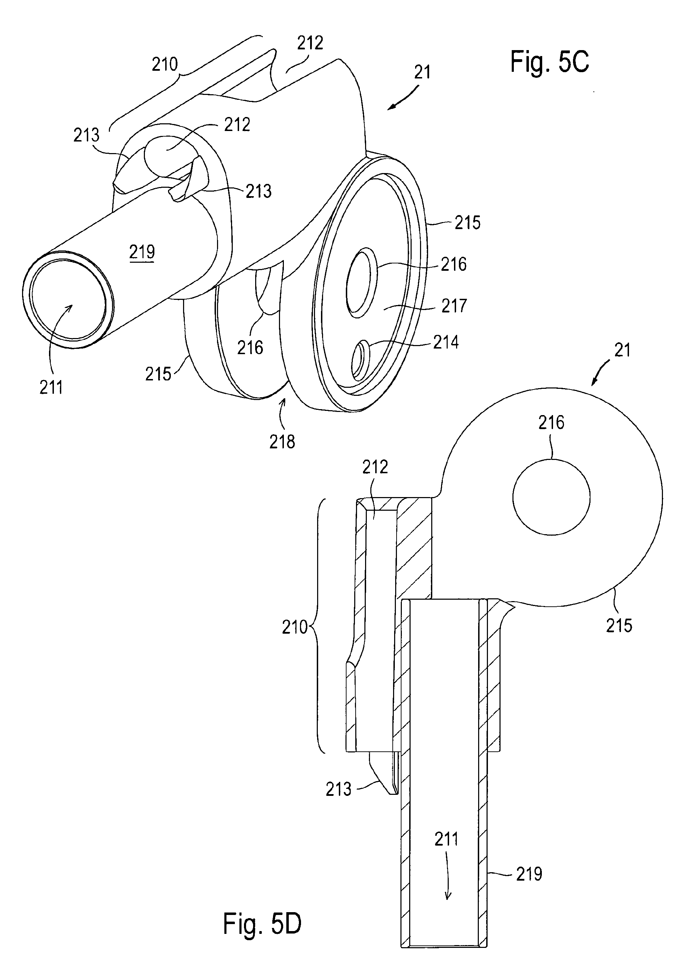

- Figur 5C: das erste Gelenkteil gemäss Figur 5B, in erneut gewechselter Perspektivansicht;
- Figur 5D: das erste Gelenkteil gemäss Figur 5A, im Vertikalschnitt;

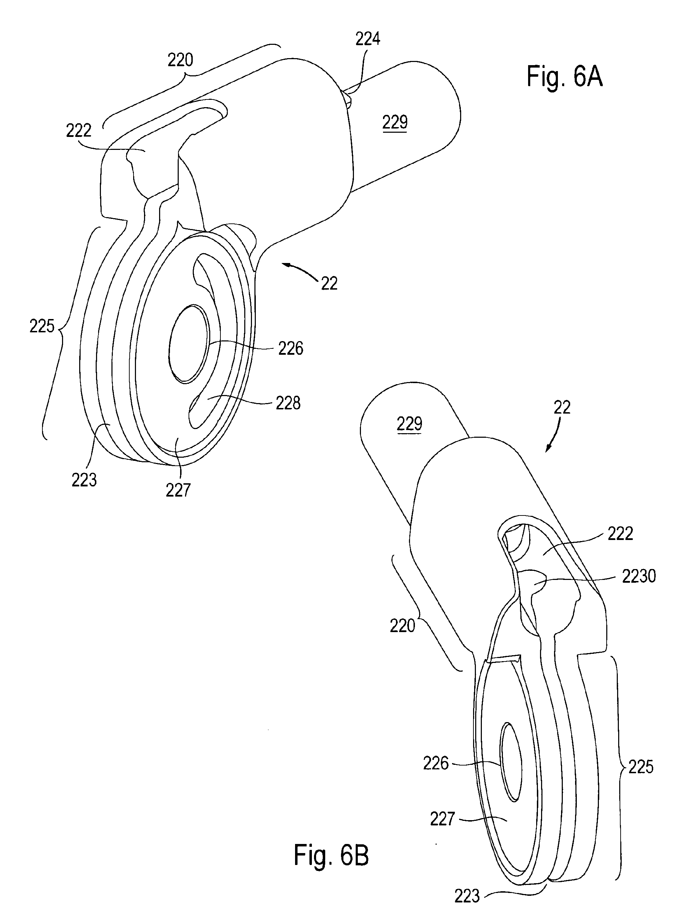

- Figur 6A: das zweite Gelenkteil aus dem zweiten Gelenk gemäss Figur 1A, in Perspektivansicht;
- Figur 6B: das zweite Gelenkteil gemäss Figur 6A, in gewechselter Perspektivansicht;

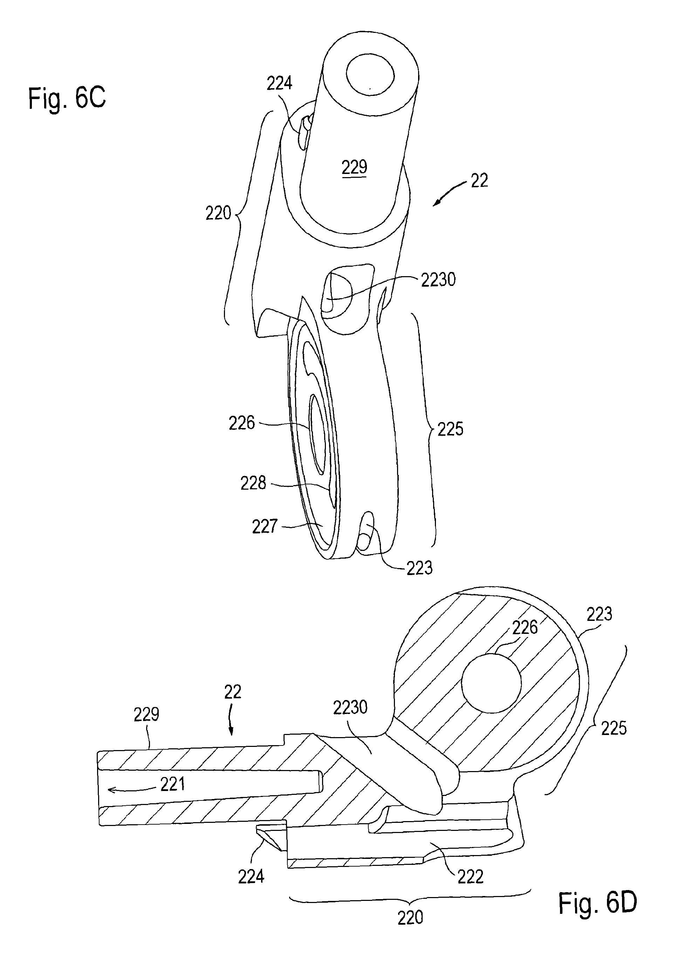

- Figur 6C: das zweite Gelenkteil gemäss Figur 6A, in erneut gewechselter Perspektivansicht;
- Figur 6D: das zweite Gelenkteil gemäss Figur 6A, im Vertikalschnitt;

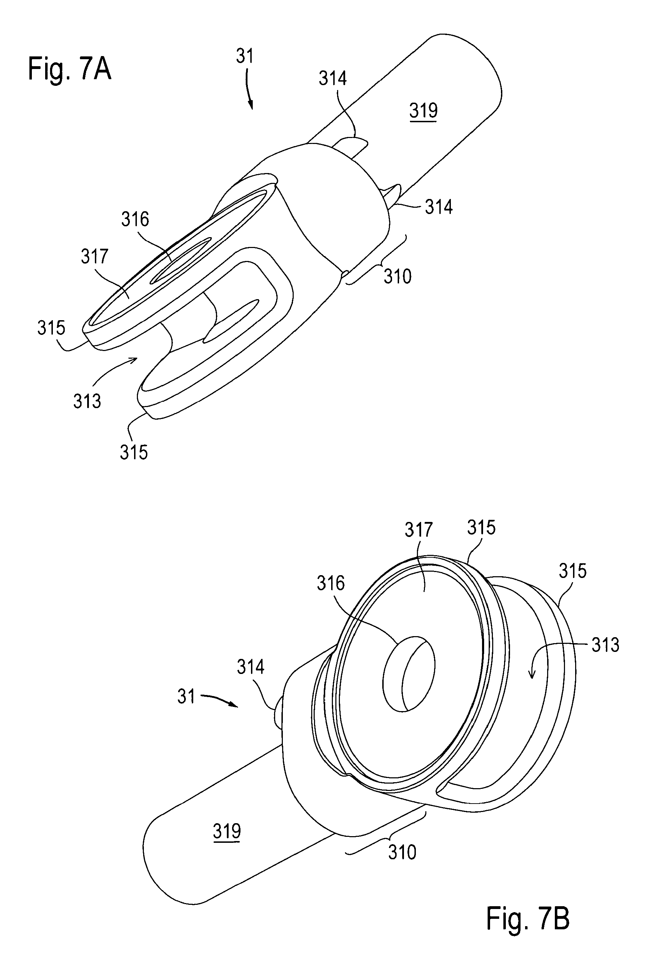

- Figur 7A: das erste Gelenkteil aus dem dritten Gelenk gemäss Figur 1A, in Perspektivansicht;
- Figur 7B: das erste Gelenkteil gemäss Figur 7A, in gewechselter Perspektivansicht;

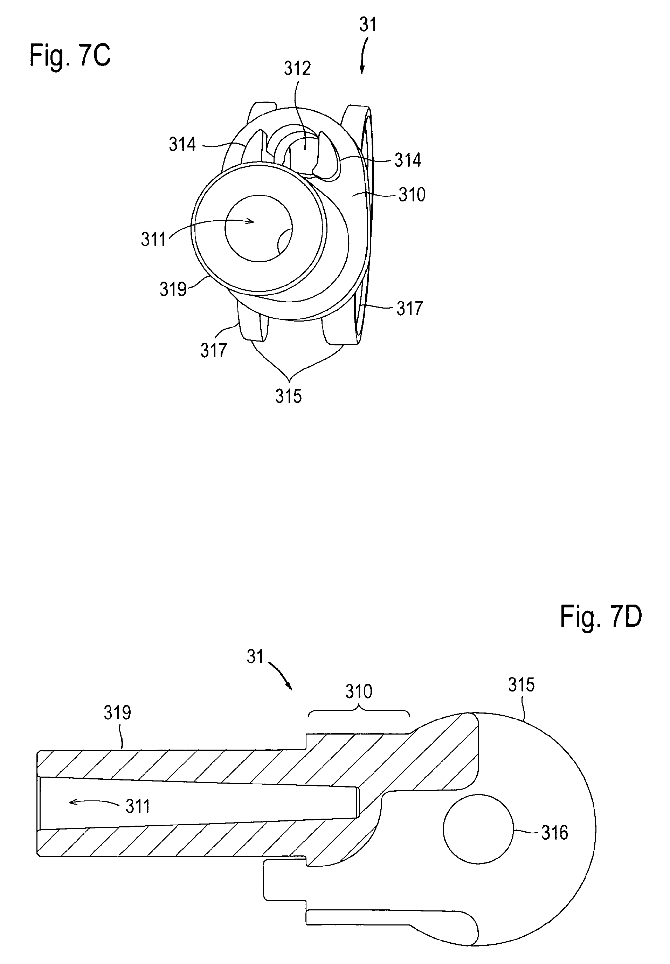

- Figur 7C: das erste Gelenkteil gemäss Figur 7A, in erneut gewechselter Perspektivansicht;
- Figur 7D: das erste Gelenkteil gemäss Figur 7A, im Vertikalschnitt;

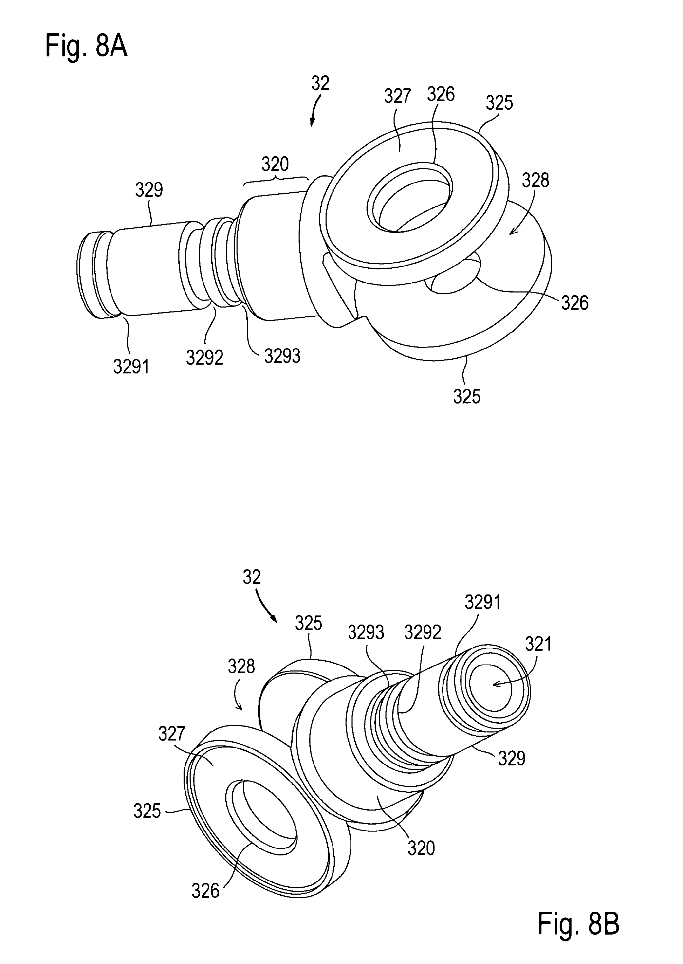

- Figur 8A: das zweite Gelenkteil aus dem dritten Gelenk gemäss Figur 1A, in Perspektivansicht;
- Figur 8B: das zweite Gelenkteil gemäss Figur 8A, in gewechselter Perspektivansicht;

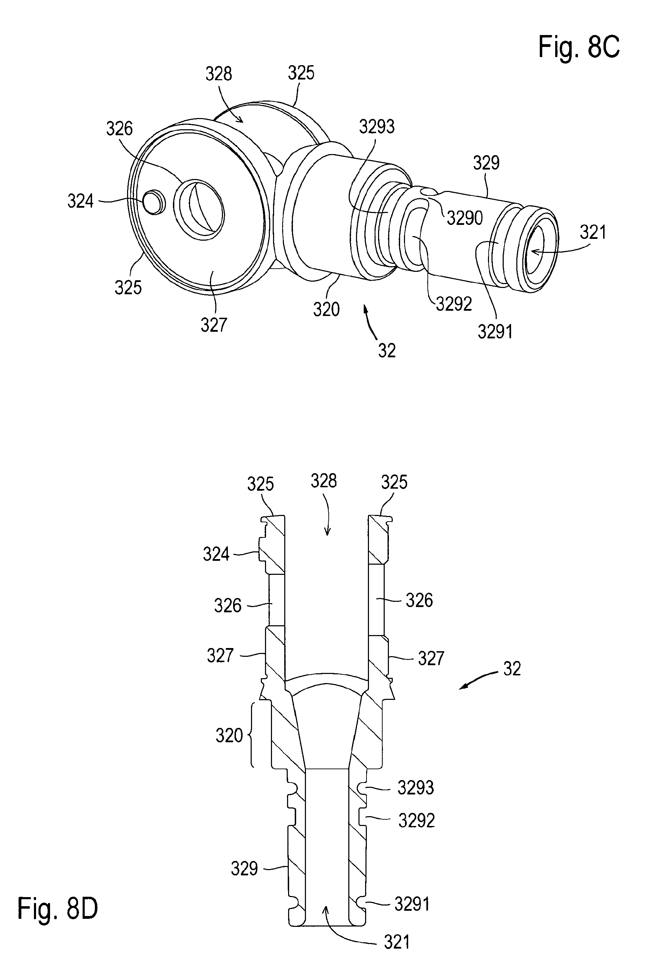

- Figur 8C: das zweite Gelenkteil gemäss Figur 8A, in erneut gewechselter Perspektivansicht;
- Figur 8D: das zweite Gelenkteil gemäss Figur 8A, im Vertikalschnitt;
- Figur 9A: eine Schraube zum Verbinden der jeweils ersten und zweiten Gelenkteile des ersten und zweiten Gelenks aus Figur 1A, in Perspektivansicht;
- Figur 9B: eine Schraube zum Verbinden der ersten und zweiten Gelenkteile des dritten Gelenks aus Figur 1A, in Perspektivansicht;
- Figur 10A: eine Mutter zum Anbringen an der Schraube gemäss den Figuren 9A oder 9B, in Perspektivansicht;
- Figur 10B: die Mutter gemäss Figur 10A, in gewechselter Perspektivansicht;
- Figur 11: das untere Rohr gemäss Figur 1A, in Perspektivansicht;

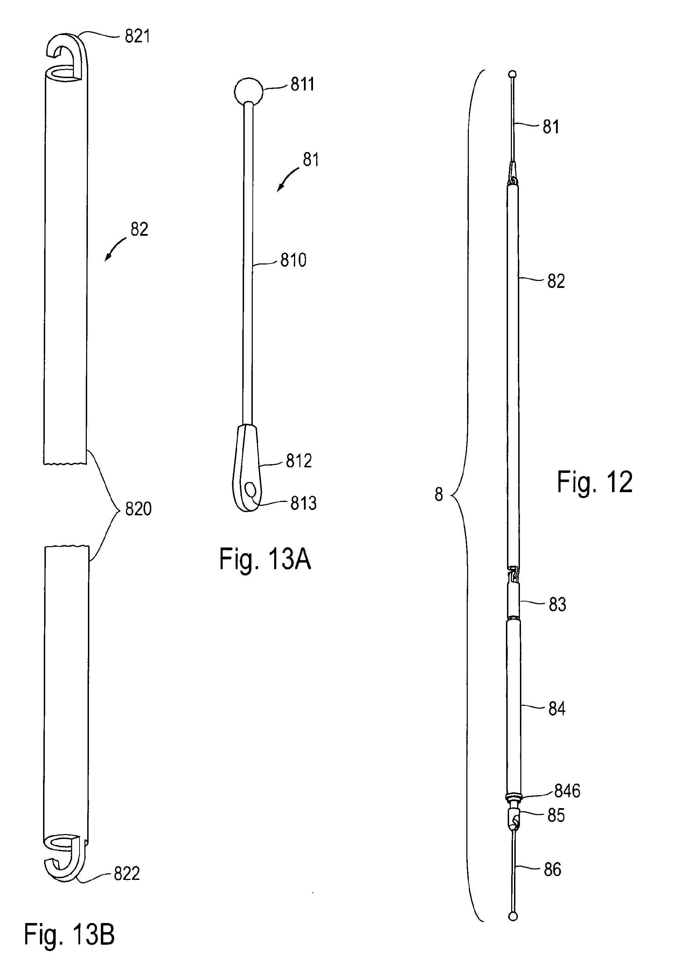

- Figur 12: eine Federanordnung aus dem inneren Rohr, bestehend aus einer ersten und zweiten Feder, einem ersten und zweiten Anker sowie einem ersten und zweiten Endstück, in Perspektivansicht;
- Figur 13A: der erste Anker gemäss Figur 12, in Perspektivansicht;
- Figur 13B: die zweite Feder gemäss Figur 12, in Perspektivansicht;

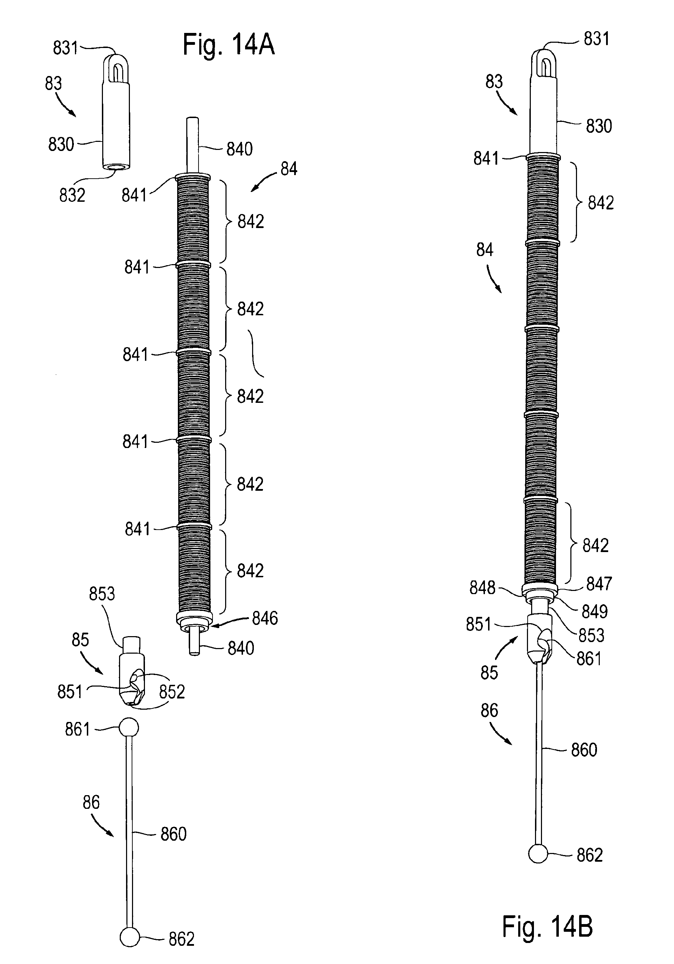

- Figur 14A: die erste Feder, das erste und zweite Endstück sowie der zweite Anker gemäss Figur 12, in partieller, perspektivischer Explosivansicht;
- Figur 14B: die Anordnung gemäss Figur 14A, zusammengebaut, in Perspektivansicht;

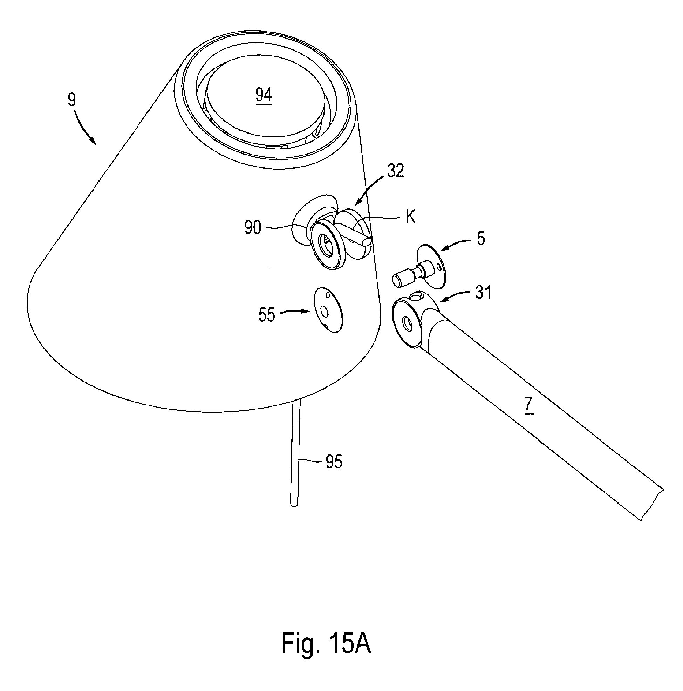

- Figur 15A: den Schirm aus Figur 1A, mit dem dritten Gelenk, der Schraube und der Mutter sowie dem oberen Rohr, in partieller, perspektivischer Explosivansicht;

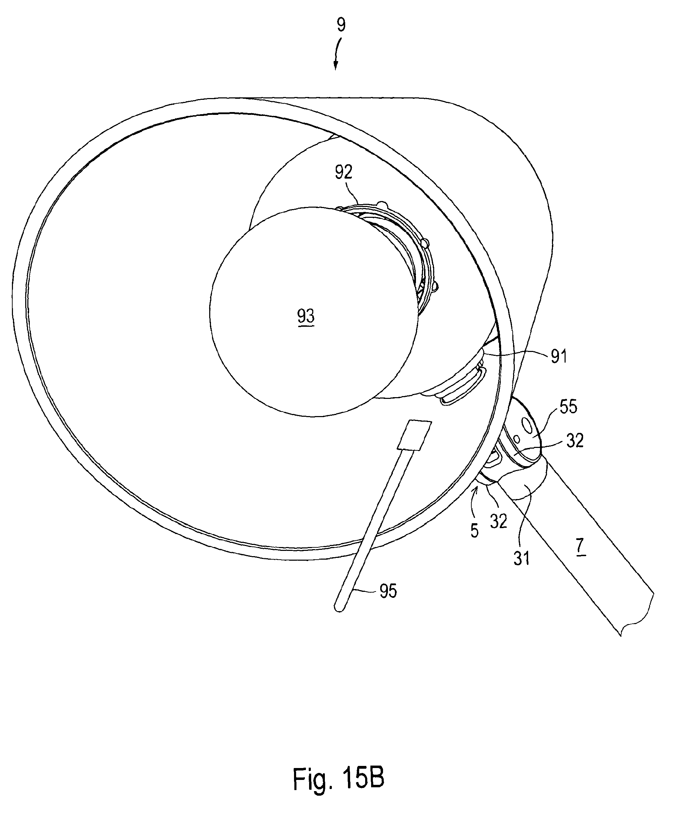

- Figur 15B: die Anordnung gemäss Figur 15A, zusammengebaut, in gewechselter Perspektivansicht;
- Figur 16A: das vergrösserte Detail X1 aus Figur 1A;
- Figur 16B: das vergrösserte Detail X2 aus Figur 1A;
- Figur 17A: das vergrösserte Detail X3 aus Figur 1B;
- Figur 17B: das vergrösserte Detail X4 aus Figur 1B;
- Figur 18A: das vergrösserte Detail X5 aus Figur 1C;
- Figur 18B: das vergrösserte Detail X6 aus Figur 1C;
- Figur 19A: das vergrösserte Detail X7 aus Figur 1D;
- Figur 19B: das vergrösserte Detail X8 aus Figur 1D;
- Figur 20A: das vergrösserte Detail X9 aus Figur 1E;
- Figur 20B: das vergrösserte Detail X10 aus Figur 1E;
- Figur 21A: die Leuchte in ähnlicher Auslenkung gemäss Figur 1B, in einer sechsten Stellung, im partiellen Vertikalschnitt, in Seitenansicht;

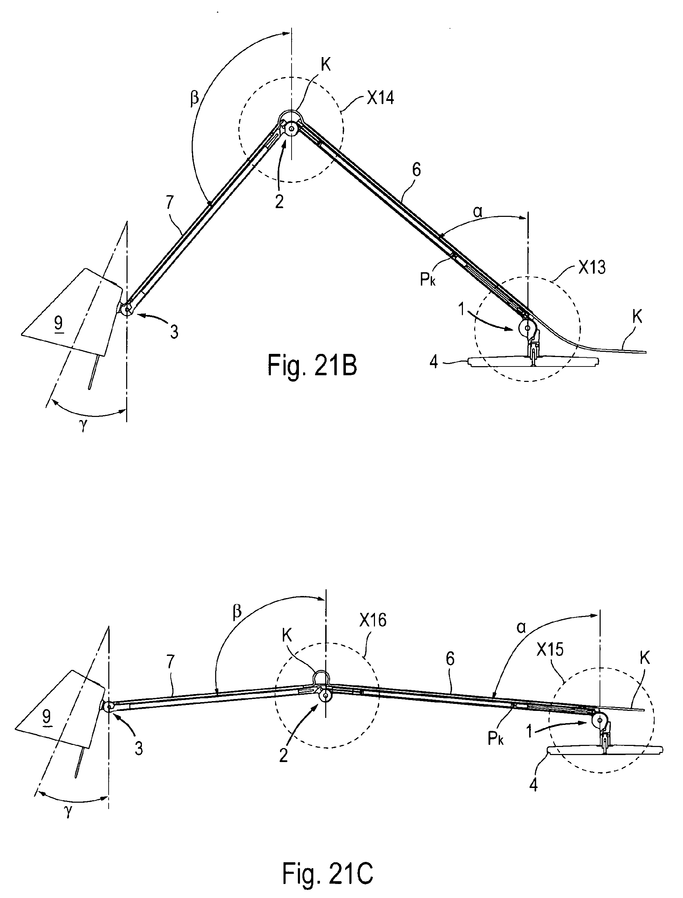

- Figur 21B: die Leuchte in ähnlicher Auslenkung gemäss Figur 1A, in einer siebten Stellung, im partiellen Vertikalschnitt, in Seitenansicht;
- Figur 21C: die Leuchte in der Auslenkung gemäss Figur 1C, im partiellen Vertikalschnitt, in Seitenansicht;

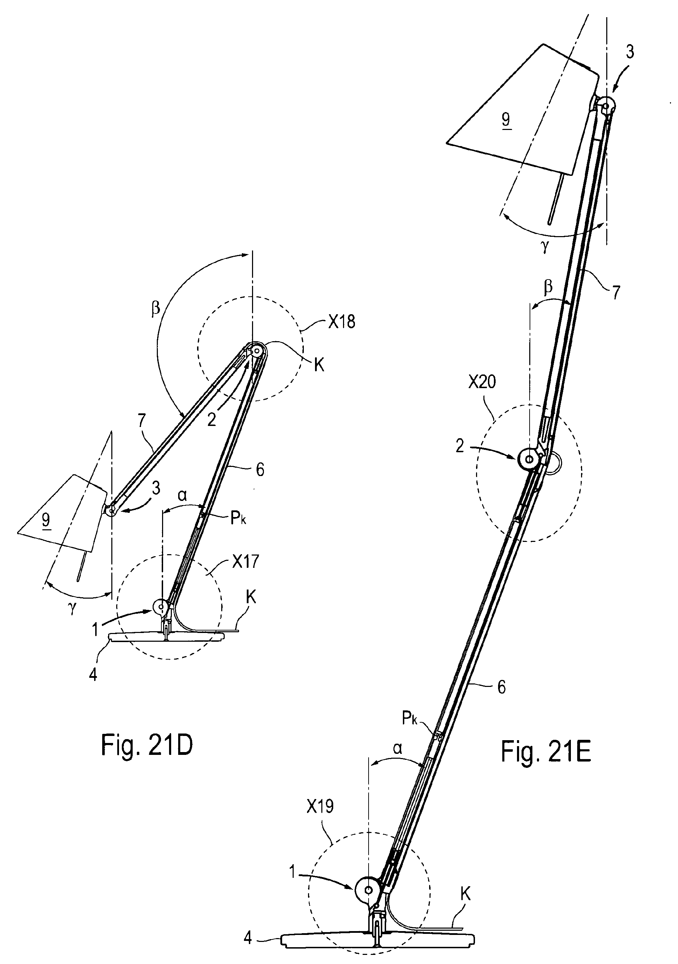

- Figur 21D: die Leuchte in der Auslenkung gemäss Figur 1D, im partiellen Vertikalschnitt, in Seitenansicht;
- Figur 21E: die Leuchte in der Auslenkung gemäss Figur 1E, im partiellen Vertikalschnitt, in Seitenansicht;

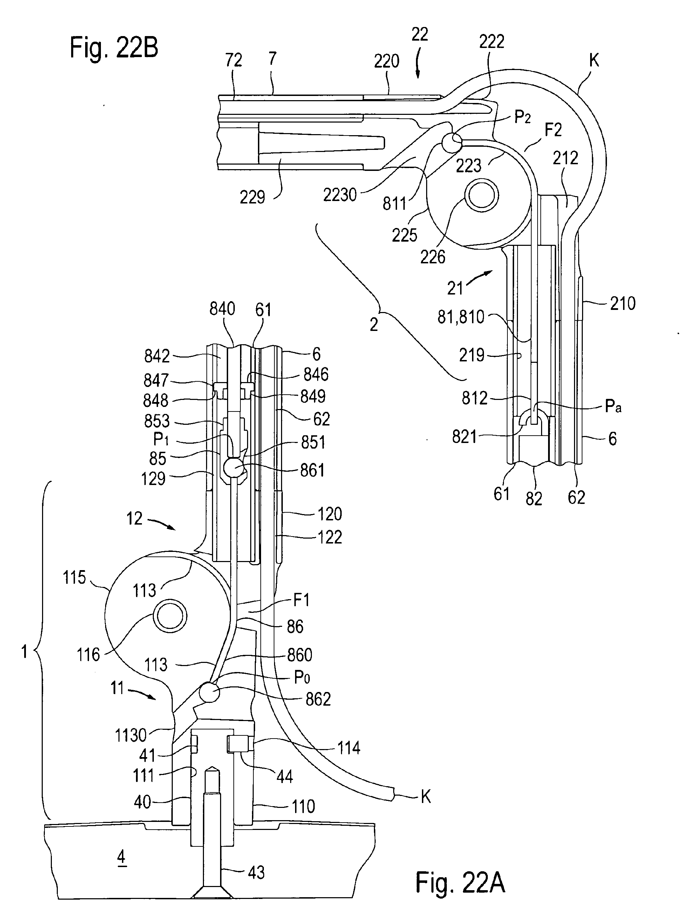

- Figur 22A: das vergrösserte Detail X11 aus Figur 21A;
- Figur 22B: das vergrösserte Detail X12 aus Figur 21A;

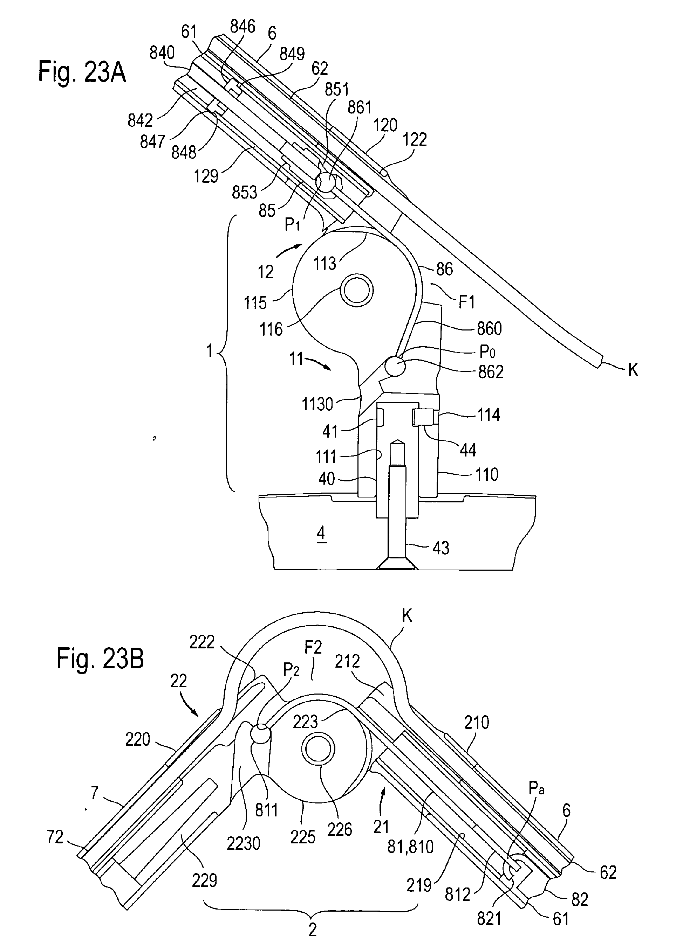

- Figur 23A: das vergrösserte Detail X13 aus Figur 21B;
- Figur 23B: das vergrösserte Detail X14 aus Figur 21B;

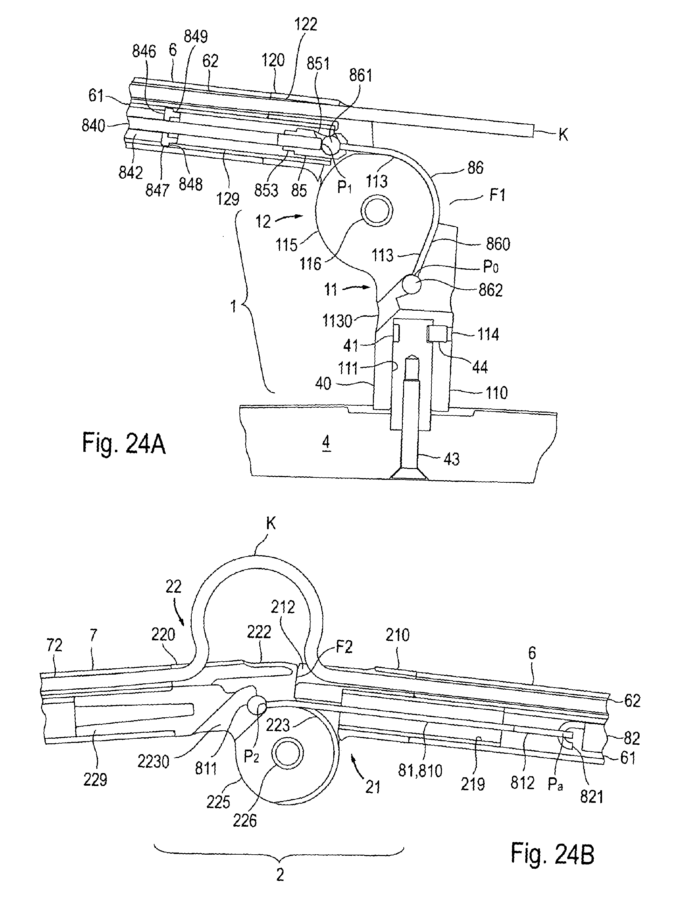

- Figur 24A: das vergrösserte Detail X15 aus Figur 21C;
- Figur 24B: das vergrösserte Detail X16 aus Figur 21C;

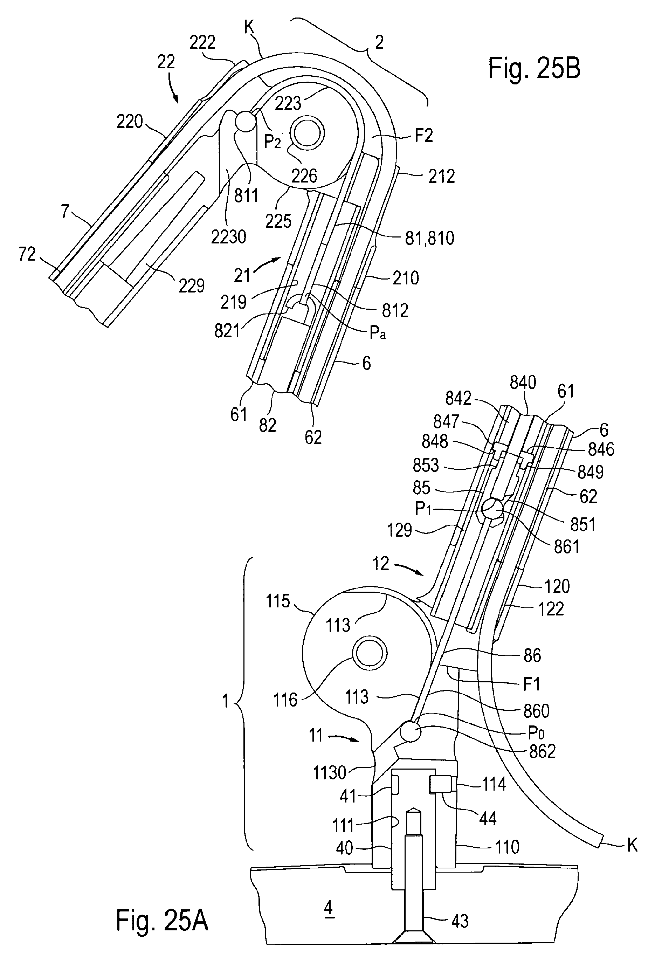

- Figur 25A: das vergrösserte Detail X17 aus Figur 21D;
- Figur 25B: das vergrösserte Detail X18 aus Figur 21D;

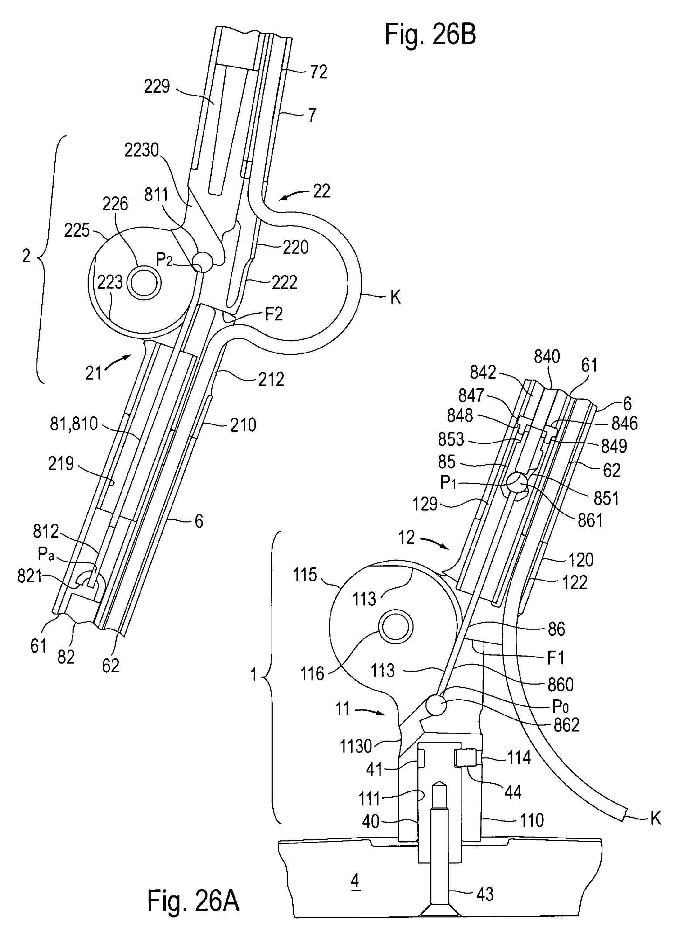

- Figur 26A: das vergrösserte Detail X19 aus Figur 21E; und
- Figur 26B: das vergrösserte Detail X20 aus Figur 21E.

### Ausführungsbeispiel

Mit Bezug auf die beiliegenden Zeichnungen erfolgt nachstehend die detaillierte Beschreibung eines Ausführungsbeispiels der Leuchte mit dem einstellbaren Arm in verschiedenen Stellungen. Die Erläuterung des konstruktiven Aufbaus und der Funktion wird beispielhaft in der Gestaltungsvariante als Tischleuchte vorgenommen.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A bis 1 E

Die Tischleuchte besteht, soweit von aussen ersichtlich, prinzipiell aus einem unteren und einem oberen Rohr **6,7,** die zur Aufnahme eines Kabels **K** und der verdeckten Federanordnung bestimmt sind, einem Schirm **9,** einem Fuss **4** und einem ersten, zweiten sowie dritten Gelenk **1,2,3.** Die beiden Rohre **6,7** erstrecken sich in einer Ebene, d.h. sie würden in zueinander geradliniger Ausrichtung fluchten. Das erste Gelenk **1** ist zwischen dem Fuss **4** und dem unteren Rohr **6** angeordnet. Das zweite Gelenk **2** sitzt zwischen dem unteren Rohr **6** und dem oberen Rohr **7.** Gegenüber dem zweiten Gelenk **2,** im Anschluss an das obere Rohr **7,** ist das dritte Gelenk **3** positioniert, an dem der Schirm **9** befestigt ist. Der vom oberen und unteren Rohr **6,7** gebildete Arm der Tischleuchte, lässt sich mittels der Gelenke **1,2** gegenüber der Vertikalen verstellen, so dass verschiedene Stellpositionen der Tischleuchte realisierbar sind, wobei der Winkel α am ersten Gelenk **1** im Verhältnis zur Längserstreckung des daran befestigten unteren Rohrs **6** und der Winkel β am zweiten Gelenk **2** im Verhältnis zur Längserstreckung des daran befestigten oberen Rohr **7** wählbar ist. Dies jeweils auf die Vertikale bezogen. Mittels des dritten Gelenks **3** kann man, bezogen auf die Vertikale, den Schirm **9** in einem Winkel γ ausrichten, der zur Austrittsrichtung des aus dem Schirm **9** kommenden Lichts definiert wird. Ferner ist das erste Gelenk **1** mit dem sich daran anschliessenden Arm auf dem Fuss **4** um die Vertikale drehbar. Zusätzlich zur Einstellbarkeit des Schirms **9** im Winkel γ ist der Schirm **9** ausserdem auf dem dritten Gelenk **3** drehbar gelagert. Für die nachfolgenden Stellungen werden die Winkel α,β,γ im Uhrzeigersinn als "negativ" und entgegen dem Uhrzeigersinn als "positiv" angesehen.

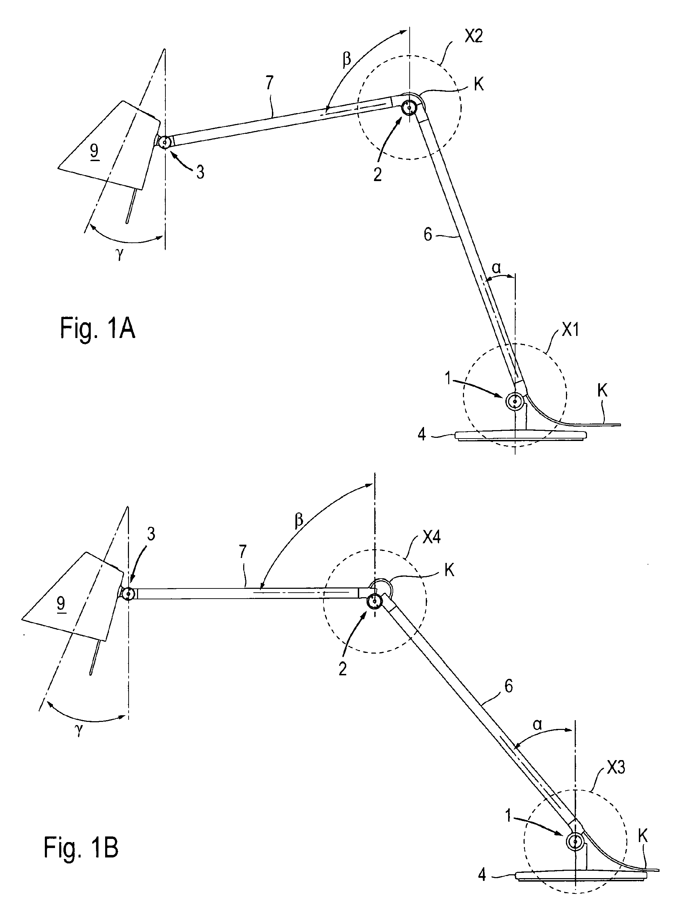

### Figur 1A - Tischleuchte in erster Stellung

In dieser Stellung hat der Winkel α einen kleinen, positiven Wert von ca. +20°, so dass das untere Rohr **6** leicht nach vorn geneigt ist. Der Winkel β beträgt ca. +100°, so dass das obere Rohr **7** leicht nach unten geneigt ist. Der Winkel γ beträgt ca. +25°, so dass die Austrittsrichtung des Schirms **9** stark nach unten geneigt ist. In allen nachfolgend gezeigten Stellungen bleibt der Winkel γ unverändert und wird daher nicht erneut erwähnt. Das untere Rohr **6** und das obere Rohr **7** nehmen zueinander einen nicht bezeichneten Winkel von ca. 100° ein.

### Figur 1B- Tischleuchte in zweiter Stellung

Bei dieser Stellung beträgt der Winkel α ca. +40°, so dass das untere Rohr **6** mehr nach vorn geneigt ist. Der Winkel β beträgt ca. +90°, so dass das obere Rohr **7** horizontal verläuft. Das untere Rohr **6** und das obere Rohr **7** nehmen zueinander einen nicht bezeichneten Winkel von ca. 130° ein.

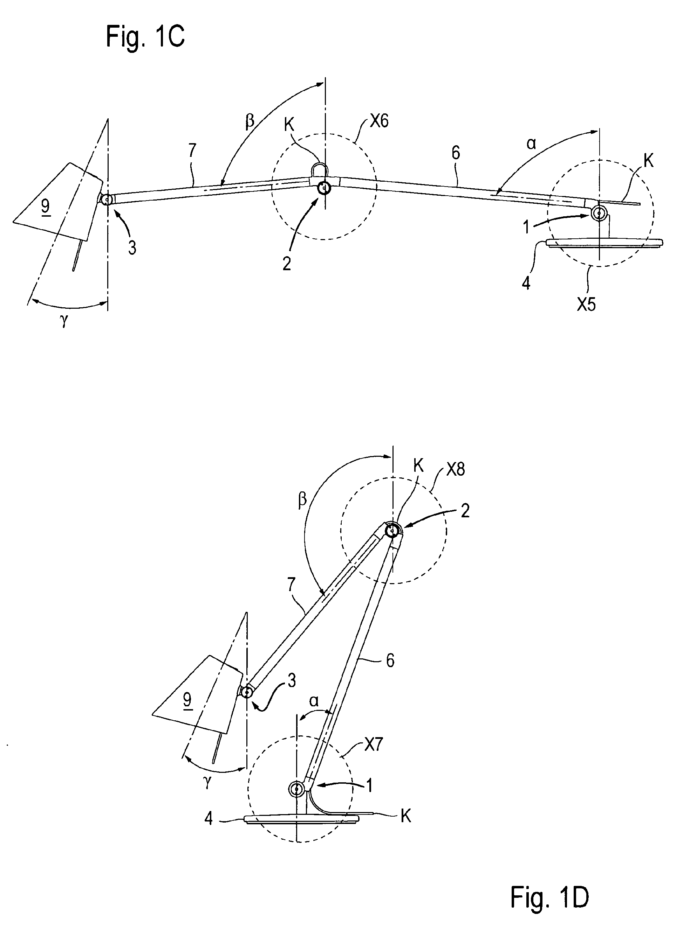

### Figur 1C - Tischleuchte in dritter Stellung

Jetzt beträgt der Winkel α ca. +85°, so dass das untere Rohr **6** maximal nach vorn geneigt ist. Der Winkel β beträgt ca. +95°, so dass das obere Rohr **7** über die Horizontale hinaus gering nach unten geneigt ist. Das untere Rohr **6** und das obere Rohr **7** nehmen zueinander einen nicht bezeichneten Winkel von ca. 170° ein. Durch den positiven Maximalwinkel α und die fast zueinander fluchtenden Rohre **6,7** erstreckt sich der Arm quasi parallel über die Tischoberfläche und der Schirm **9** ist am nächsten zur Tischoberfläche positioniert.

### Figur 1D - Tischleuchte in vierter Stellung

Hier beträgt der Winkel α ca. -20°, so dass das untere Rohr **6** maximal nach hinten geneigt ist. Der Winkel β beträgt ca. +140°, so dass das obere Rohr **7** stark nach unten geneigt ist. Das untere Rohr **6** und das obere Rohr **7** nehmen zueinander einen nicht bezeichneten Winkel von ca. 20° ein, so dass beide Rohre **6,7** am engsten zueinander positioniert sind.

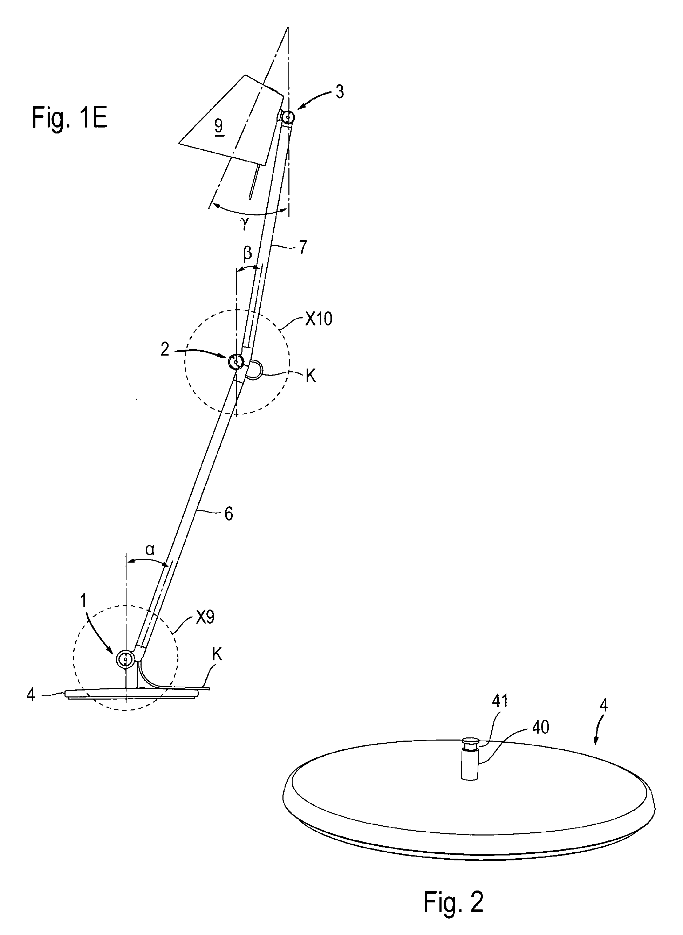

### Figur 1E - Tischleuchte in fünfter Stellung

Der Winkel α beträgt erneut ca. -20°, so dass das untere Rohr **6** maximal nach hinten geneigt ist. Der Winkel β beträgt ca. -10°, so dass das obere Rohr **7** über die Vertikale hinaus gering nach hinten geneigt ist. Das untere Rohr **6** und das obere Rohr **7** nehmen zueinander wieder einen nicht bezeichneten Winkel von ca. 170° ein. Durch den negativen Maximalwinkel α und die fast zueinander fluchtenden Rohre **6,7** erstreckt sich der Arm quasi senkrecht zur Tischoberfläche und der Schirm **9** ist am höchsten über der Tischoberfläche positioniert.

### Figur 2

Der Fuss **4** hat im wesentlichen die Form eines scheibenförmigen Tellers, der zentrisch einen senkrecht nach oben gerichteten Zapfen **40** besitzt. Am Zapfen **40** ist eine umlaufende Nut **41** vorhanden.

### Figuren 3A bis 3C

Das erste Gelenk **1** besitzt ein erstes Gelenkteil **11,** das einen Schaft **110** hat, an den ein im wesentlichen kreisförmiges Scheibensegment **115** angesetzt ist. Innerhalb des Schafts **110** ist ein zylindrischer, sacklochförmiger Hohlraum **111** ausgebildet. Das Scheibensegment **115** hat an den Seitenflächen im Zentrum ein Durchgangsloch **116.** An den Seitenflächen ist jeweils eine kreisförmige Vertiefung **117** vorhanden, in die - im später montierten Zustand - zur Minimierung des Reibwiderstands mit dem zweiten Gelenkteil **12** vorteilhaft je eine Gleitscheibe eingefügt wird. Innerhalb der Vertiefung **117** ist an einer Seitenfläche, eine sich im Kreisbogen erstreckende Nut **118** vorhanden, in der der vordere Bereich eines Anschlagzapfens eingreift. Am Scheibensegment **115** ist an dessen Aussenumfang anteilig eine Seilnut **113** eingelassen, die sich im Schaft **110** fortsetzt und dort in einem Nest **1130** endet. Zum Nest **1130** beabstandet hat der Schaft **110** eine in den Hohlraum **111** mündende Gewindebohrung **114.**

### Figuren 4A bis 4C

Das zweite Gelenkteil **12** des ersten Gelenks **1** hat einen Schaft **120,** an den zwei im wesentlichen kreisförmige Scheibensegmente **125** zueinander parallel angesetzt sind, zwischen denen sich ein Freiraum **128** befindet. An den beiden Scheibensegmenten **125** ist an der jeweiligen äusseren Seitenfläche eine kreisförmige Vertiefung **127** vorgesehen. Durch die Scheibensegmente **125** verläuft jeweils ein zentrisches Durchgangsloch **126,** die beide zueinander fluchten, wobei eines der Durchgangslöcher **126** einen grösseren Radius hat.

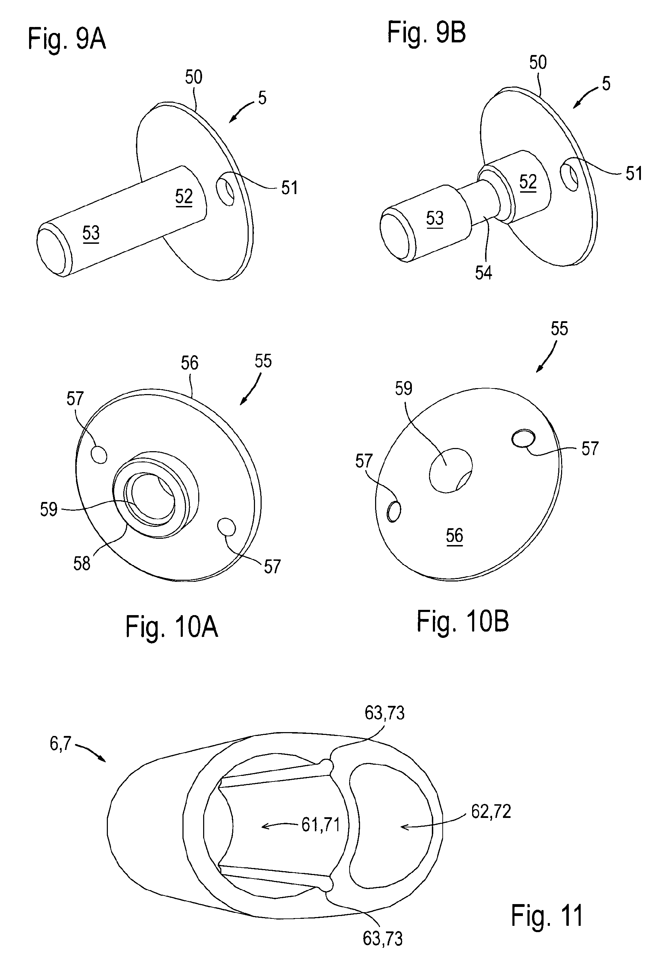

Am Scheibensegment **125** mit dem kleineren Durchgangsloch **126** ist innerhalb der Vertiefung **127** eine zum Freiraum **128** mündende Bohrung **124** vorhanden, um darin die Spitze eines Zapfens aufzunehmen, dessen Kopf im Sackloch **51** der Schraube **5** steckt (s. Figur 9A). Vom Schaft **120** erstreckt sich ein Ansatz **129,** durch den axial ein erster Kanal **121** verläuft, der sich durch den Schaft **120** fortsetzt und am Übergang zu den Scheibensegmenten **125** zum Freiraum **128** hin austritt. Parallel zum ersten Kanal **121** verläuft im Schaft **120** ein zweiter Kanal **122** geringerer Weite, der am Übergang zwischen Schaft **120** und Ansatz **129** austritt. Hier sind die Austrittsmündung des zweiten Kanals **122** flankierende Führungsnasen **123** angeordnet.

### Figuren 5A bis 5D

Das zweite Gelenk **2** besitzt ein erstes Gelenkteil **21,** das einen Schaft **210** hat, an den zwei im wesentlichen kreisförmige Scheibensegmente **215** zueinander parallel angesetzt sind, zwischen denen sich ein Freiraum **218** befindet. An den beiden äusseren Seitenflächen haben die Scheibensegmente **215** jeweils eine kreisförmige Vertiefung **217.** Durch die Scheibensegmente **215** verläuft jeweils ein zentrisches Durchgangsloch **216,** die beide zueinander fluchten, wobei eines der Durchgangslöcher **216** einen grösseren Radius hat.

Am Scheibensegment **215** mit dem kleineren Durchgangsloch **216** ist innerhalb der Vertiefung **217** eine zum Freiraum **218** mündende Bohrung **214** vorhanden, um darin die Spitze eines weiteren Zapfens aufzunehmen, dessen Kopf in dem Sackloch **51** der hier eingesetzten Schraube **5** steckt (s. Figur 9A). Vom Schaft **210** erstreckt sich ein Ansatz **219,** durch den axial ein erster Kanal **211** verläuft, der sich durch den Schaft **210** fortsetzt und am Übergang zu den Scheibensegmenten **215** zum Freiraum **218** hin austritt. Parallel zum ersten Kanal **211** verläuft im Schaft **210** ein zweiter Kanal **212** geringerer Weite, der am Übergang zwischen Schaft **210** und Ansatz **219** austritt. Hier sind die Austrittsmündung des zweiten Kanals **212** flankierende Führungsnasen **213** angeordnet. Aus ästhetischen Gründen haben die Scheibensegmente **215,225** der beiden Gelenkteile **21,22** des zweiten Gelenks **2** im Verhältnis zu den Scheibensegmenten **115,125** der beiden Gelenkteile **11,12** des ersten Gelenks **1** einen verminderten Durchmesser, was als Einflussgrösse bei der Dimensionierung der Federanordnung **8** zu berücksichtigen ist.

### Figuren 6A bis 6D

Das zweite Gelenkteil **22** des zweiten Gelenks **2** hat einen Schaft **220,** an den ein im wesentlichen kreisförmiges Scheibensegment **225** angesetzt ist. Das Scheibensegment **225** hat an den Seitenflächen im Zentrum ein Durchgangsloch **226.** An den Seitenflächen ist jeweils eine kreisförmige Vertiefung **227** vorhanden, um zur Minimierung des Reibwiderstands - im vollständig montierten Zustand - mit dem ersten Gelenkteil **21** darin jeweils eine Gleitscheibe aufzunehmen. Innerhalb der Vertiefung **227** ist an einer Seitenfläche, eine sich im Kreisbogen erstreckende Nut **228** vorhanden, in der die Spitze des das eine Scheibensegment **215** vom ersten Gelenkteil **21** via die Bohrung **214** durchragenden Zapfens eingreift. Am Scheibensegment **225** ist an dessen Aussenumfang anteilig eine Seilnut **223** eingelassen, die sich im Schaft **220** fortsetzt und dort in einem Nest **2230** endet. Im Schaft **220** verläuft ein zweiter Kanal **222,** der am Übergang zwischen Schaft **220** und Ansatz **229** austritt. Hier sind die Austrittsmündung des zweiten Kanals **222** flankierende Führungsnasen **224** angeordnet. Vom freien Ende des Ansatzes **229** erstreckt sich ein Sackloch **221,** das im wesentlichen aus Gründen der Fertigung und Gewichtsersparnis vorgesehen ist.

### Figuren 7A bis 7D

Das dritte Gelenk **3** besitzt ein erstes Gelenkteil **31,** das einen Schaft **310** hat, an den zwei im wesentlichen kreisförmige Scheibensegmente **315** zueinander parallel angesetzt sind, zwischen denen sich eine Kabelnut **313** befindet. An den beiden äusseren Seitenflächen haben die Scheibensegmente **315** jeweils eine kreisförmige Vertiefung **317** zum Einsetzen einer Gleitscheibe, um den Reibwiderstand im später montierten Zustand mit dem zweiten Gelenkteil **32** zu reduzieren. Durch die Scheibensegmente **315** verläuft jeweils ein zentrisches Durchgangsloch **316,** die beide zueinander fluchten. Vom Schaft **310** erstreckt sich ein Ansatz **319,** an dessen freien Ende ein Sackloch **311** mündet, das im wesentlichen aus Gründen der Fertigung und Gewichtsersparnis vorgesehen ist. Durch den Schaft 310 verläuft axial ein zweiter Kanal **312,** der am Übergang zu den Scheibensegmenten **315** zur Kabelnut **313** hin austritt. Hier sind die Austrittsmündung des zweiten Kanals **312** flankierende Führungsnasen **314** angeordnet.

### Figuren 8A bis 8D

Das zweite Gelenkteil **32** des dritten Gelenks **3** hat einen Schaft **320,** an den zwei im wesentlichen kreisförmige Scheibensegmente **325** zueinander parallel angesetzt sind, zwischen denen sich ein Freiraum **328** befindet. An den beiden Scheibensegmenten **325** ist an der jeweiligen äusseren Seitenfläche eine kreisförmige Vertiefung **327** vorgesehen. Durch die Scheibensegmente **325** verläuft jeweils ein zentrisches Durchgangsloch **326,** die beide zueinander fluchten, wobei eines der Durchgangslöcher **326** einen grösseren Radius hat. Am Scheibensegment **325** mit dem kleineren Durchgangsloch **326** erhebt sich aus der Vertiefung **327** ein Zapfen **324,** der im montierten Zustand im Sackloch **51** der Schraube **5** zu liegen kommt (s. Figur 9B). Vom Schaft **320** erstreckt sich ein Ansatz **329,** durch den axial ein zweiter Kanal **321** verläuft, der sich durch den Schaft **320** fortsetzt und am Übergang zu den Scheibensegmenten **325** zum Freiraum **328** hin austritt. Nahe dem Übergang zum Schaft **320** befindet sich am Ansatz **329** eine dritte Ringnut **3293,** der eine zweite Ringnut **3292** folgt, welche nicht umlaufend, sondern durch einen Blockiersteg **3290** unterbrochen ist. Nahe dem freien Ende des Ansatzes **329** ist eine dritte Ringnut **3293** vorhanden.

### Figuren 9A bis 10B

Die Schraube **5** hat einen vorzugsweise scheibenförmigen, kreisrunden Kopf **50,** von dessen Unterseite sich zentrisch ein Schaft **52** erstreckt, der an seinem freien Ende mit einem Aussengewinde **53** versehen ist. Die Oberseite des Kopfes **50** ist vorzugsweise leicht nach aussen gewölbt. Nahe dem Aussenrand des Kopfes **50** ist ein Sackloch **51** vorhanden, das nur zum Schaft **52** hin mündet. Diese Schraube 5 gemäss Figur 9A wird am ersten und zweiten Gelenk **1,2** eingesetzt.

Für die Verwendung am dritten Gelenk **3** hat die Schraube **5** am Übergang zum Aussengewinde **53** einen zirkulären Einstich **54,** um Platz für den Durchlass des Kabels **K** zu schaffen (s. Figur 9B).

Die Mutter **55** besitzt ein vorzugsweise kreisrundes Scheibensegment **56,** das ebenfalls leicht nach aussen gewölbt ist. Von der Unterseite des Scheibensegments **56** erhebt sich zentrisch ein Zylindersegment **58,** das ein Innengewinde **59** hat. Im montierten Zustand greift das Aussengewinde **53** der Schraube **5** in das Innengewinde **59** der Mutter **55** ein. Das Scheibensegment **56** der Mutter **55** hat Eingriffskonturen **57** - hier in Gestalt von zwei zueinander beabstandeten Löchern - zum Ansetzen eines Werkzeugs.

### Figur 11

Das untere Rohr **6** besitzt vorzugsweise eine ovale Querschnittsform. Durch das Rohr **6** verlaufen ein erster und ein zweiter Kanal **61,62,** wobei die Kanäle voneinander getrennt sind und der zweite Kanal **62** von geringerer Weite ist. Im ersten Kanal **61** sind zwei voneinander beabstandete, parallel verlaufende Nuten **63** eingelassen. Das obere Rohr **7** ist identisch beschaffen und weist somit ebenfalls den ersten und zweiten Kanal **71,72** mit den im ersten Kanal **71** verlaufenden Nuten **73** auf.

### Figuren 12 bis 14B

Die Federanordnung **8** besteht im wesentlichen aus der ersten Feder **84** - hier eine Anordnung von Tellerfedern - und einer dazu gekoppelten zweiten Feder **82,** vorzugsweise eine Spiralfeder, mit einem viele Windungen aufweisenden länglichen Federkörper **820.** Am oberen Ende beginnt die Federanordnung **8** mit einem ersten Anker **81,** der im wesentlichen aus einem Strang **810,** vorzugsweise ein flexibles Seil, besteht und am oberen Ende mit einem ersten Halteelement **811** versehen ist, das die Form einer Kugel hat. Am unteren Ende des Strangs **810** ist ein zweites Halteelement **812** angeordnet, welches die Form einer Lasche mit einem Durchgangsloch **813** besitzt. Der Federkörper **820** besitzt an seinem oberen Ende ein erstes Anschlussorgan **821,** das in das Durchgangsloch **813** am ersten Anker **81** eingehängt ist. An seinem unteren Ende hat der Federkörper **820** ein zweites Anschlussorgan **822,** das mit einem komplementären Anschlussorgan **831** des ersten Endstücks **83** verbunden ist.

Das erste Endstück **83** besteht im wesentlichen aus einem Schaft **830,** an dessen oberen Ende sich das Anschlussorgan **831** befindet, während am unteren Ende des Schafts **830** eine Öffnung **832** vorhanden ist, die der festen Aufnahme des Stabs **840** dient, welcher die erste Feder **84** axial durchragt. Die erste Feder **84** umfasst mehrere Federpakete **842,** die voneinander durch jeweils eine Scheibe **841** abgegrenzt und auf dem Stab **840** beweglich angeordnet sind. Das erste Endstück **83** begrenzt die Federpakete **842** nach oben. Andererseits ist ein Zwischenstück **846** an die Federpakete **842** angefügt, das beweglich auf dem auch auf dieser Seite aus den Federpaketen **842** herausragenden Stab **840** aufgesteckt ist. Das tellerförmige Zwischenstück **846** mit seinem Axialdurchgang zum Durchlass des Stabs **840** hat ein oberes Segment **847,** welches an den Federpaketen **842** ansteht und an einer Ringschulter **848** in ein unteres Segment **849** von verringertem Durchmesser übergeht.

Dem Zwischenstück **846** folgt ein zweites Endstück **85,** welches fest auf dem Ende des Stabs **840** sitzt. Dem Zwischenstück **846** zugewandt hat das zweite Endstück **85** einen im Aussendurchmesser verringerten Zapfen **853.** Das zweite Endstück **85** besteht aus einem zylinderförmigen Körper, der ein sich lateral öffnendes Nest **851** hat. Ein Axialdurchgang **852** verläuft durch das zweite Endstück **85** und durchragt dabei auch das Nest **851,** wobei das Ende des Stabs **840** im Axialdurchgang **852** fixiert ist. Im Nest **851** ist das erste Halteelement **861** des zweiten Ankers **86** eingehängt, der im wesentlichen aus einem flexiblen Strang **860 -** vorzugsweise ein Drahtseil - besteht. Der Strang **860** des eingehängten zweiten Ankers **86** tritt durch den Axialdurchgang **852** des zweiten Endstücks **85** aus. An den Enden des Strangs **860** ist einerseits das erste Halteelement **862** und andererseits das zweite Halteelement **862** befestigt, die beide kugelförmig sind.

### Figuren 15A und 15B

Zur schwenkbaren und drehbaren Verbindung des Schirms **9** mit dem oberen Rohr **7** dient ein dazwischen angeordnetes drittes Gelenk **3,** das sich aus einem ersten und einem zweiten Gelenkteil **31,32** zusammensetzt. Seitlich im oberen Bereich ist in den Schirm **9** eine Manschette **90** eingesetzt, die eine Durchgangsöffnung umrandet, so dass sich der Schaft **320** des zweiten Gelenkteils **32** in die Durchgangsöffnung stecken lässt. Das durch das dritte Gelenk **3** geführte Kabel **K** setzt sich in dem im Ansatz **329** vorhandenen Kanal **321** fort, um an die Lampenfassung **92** zu gelangen. Der Ansatz **329** ragt in das Innere des Schirms **9** und steckt seitlich im Hals der Fassung **92,** welcher ein nicht gezeigtes Loch aufweist. Von einer auf den Fassungshals aufgerasteten Fixierklammer **91** ragt ein Stift durch das Fassungsloch in die zweite Ringnut **3292** und sichert somit den Schirm **9** mit der darin eingebauten Fassung **92** axial auf dem Ansatz **329,** während der Blockiersteg **3290** in der zweiten Ringnut **3292** das Drehen des Schirms **9** über 360° hinaus, insbesondere ein Überdrehen in gleiche Richtung mit der Gefahr der Beschädigung des Kabels **K** verhindert. In der ersten und dritten Ringnut **3291,3293** des zweiten Gelenkteils **32** sitzen nicht gezeigte Dichtungsringe, die im Fassungshals als Rutschsicherung wirken. Mit einem an der Oberseite des Schirms **9** vorhandenen Schalter **94** lässt sich die Stromzufuhr ein- und ausgeschalten. Ein Griff **95** dient zur Verstellung des Schirms **9,** wie auch der gesamten Tischleuchte.

Das erste Gelenkteil **31** wird mit seinem am Schaft **310** vorhandenen Ansatz **319** in den ersten Kanal **71** des dem Schirm **9** zugewandten Endes des oberen Rohrs **7** gesteckt. Dabei greifen die Führungsnasen **314** vom ersten Gelenkteil **31** in die die Mündung des zweiten Kanals **72** am oberen Rohr **7** ein und die Schnittfläche vom Ende des oberen Rohrs **7** liegt quasi fugenlos an der Stirnfläche des Schafts **310** an. Die beiden Gelenkteile **31,32** sind so zusammengesetzt, dass die beiden Scheibensegmente **315** des ersten Gelenkteils **31** im Freiraum **328** des zweiten Gelenkteils **32** liegen, wobei dessen zwei Scheibensegmente **325** jeweils eines der Scheibensegmente **315** des ersten Gelenkteils **31** auf der Seite der Vertiefung **317** umfassen. Im montierten Zustand sind alle Scheibensegmente **315,325 -** vorzugsweise unter Zwischenfügung von Gleitscheiben - miteinander bündig und die Durchgangslöcher **316,326** beider Gelenkteile **31,32** fluchten zueinander, so dass sich die Schraube **5** mit dem Aussenwinde **53** voran von der Seite in das zusammengefügte dritte Gelenk **3** einschieben lässt, wo sich auf der Vertiefung **327** der Zapfen **324** befindet und dieser im Sackloch **51** der Schraube **5** zu liegen kommt. Das Zylindersegment **58** wird in das Durchgangsloch **326** eingesetzt und auf das Aussenwinde **53** aufgeschraubt, wobei die Werkzeugeingriffe **57** zum Festziehen dienen. Der Kopf **50** der Schraube **5** bzw. das Scheibensegment **56** der Mutter **55** fügen sich in die abgesenkten Vertiefungen **327.** Damit sind die beiden Gelenkteile **31,32** zum dritten Gelenk **3** zusammengebaut. Das Kabel **K** tritt aus dem zweiten Durchgang **62** des oberen Rohrs **7** durch den zweiten Kanal **312** über den Freiraum **313** des ersten Gelenkteils **31** weiter in den Durchgang **321** des zweiten Gelenkteils **32** zur anschliessenden Fassung **92,** wobei das durchgeführte Kabel **K** im Bereich des Schraubenschafts **53** in dessen Einstich **54** Platz findet. Um die Einstellbarkeit des dritten Gelenks **3** bei zureichender Klemmwirkung zu gewährleisten, ist das Anzugsmoment der Schraubverbindung entsprechend zu wählen.

### Figuren 16A bis 20B

Die folgenden Ausschnittsvergrösserungen zeigen das erste und zweite Gelenk **1,2** mit den angefügten Rohren **6,7** in der ersten bis fünften Stellung gemäss den Figuren 1A bis 1E. Die auftretenden unterschiedlichen Winkel α und β sind bereits zuvor beschrieben und werden daher nicht erneut erwähnt. Der Zusammenbau des ersten und zweiten Gelenks **1,2** mittels der Schraubverbindung aus Schraube **5** und Mutter **55** ist in allen fünf Stellungen identisch und wird daher nur beim ersten Figurenpaar aufgeführt.

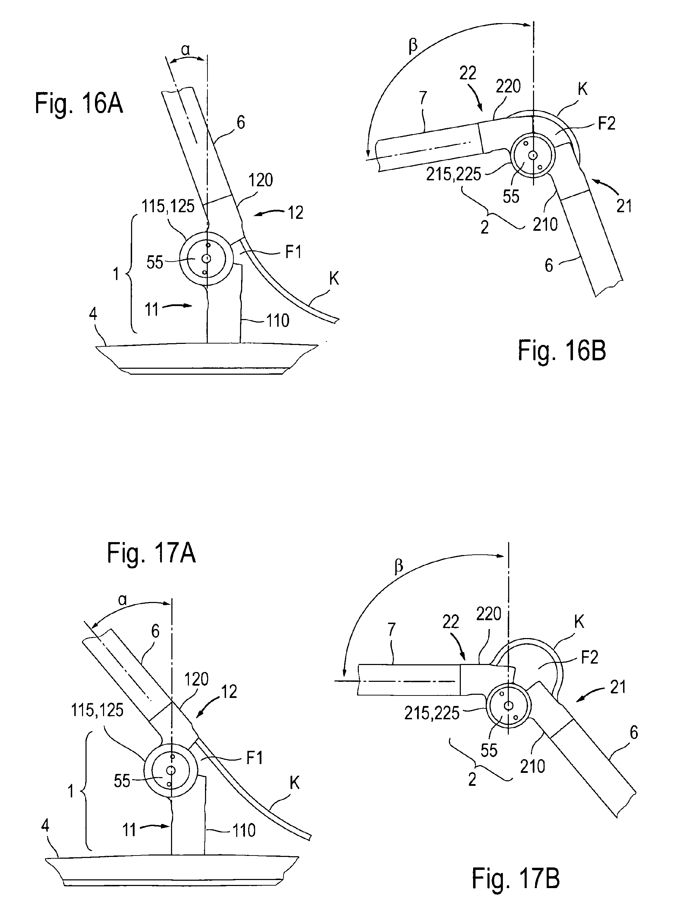

### Figur 16A und 16B-Tischleuchte in erster Stellung

Vom ersten Gelenkteil **11** des ersten Gelenks **1** steckt der Schaft **110** fixiert auf dem hier nicht sichtbaren Zapfen **40** des Fusses **4.** Das Scheibensegment **115** des ersten Gelenkteils **11** ist zwischen den beiden Scheibensegmenten **125** des zweiten Gelenkteils **12** positioniert und mittels der Schraubverbindung aus Schraube **5** und Mutter **55** montiert. Bei der momentanen Schrägstellung des unteren Rohrs **6** ist die Rückenpartie des Schafts **120** des zweiten Gelenkteils **12** von der Schulter des Schafts **110** des ersten Gelenkteils **11** abgehoben, wodurch ein adäquater erster Freiraum **F1** entsteht, über den das Kabel **K** abgeführt wird. Das Scheibensegment **225** des zweiten Gelenkteils **22** ist zwischen den beiden Scheibensegmenten **215** des ersten Gelenkteils **21** bündig eingesetzt und mittels einer weiteren Schraubverbindung aus Schraube **5** und Mutter **55** montiert. Bei der dieser Schrägstellung zwischen unterem und oberem Rohr **6,7** ist die Rückenpartie des Schafts **220** des zweiten Gelenkteils **22** von der Schulter des Schafts **210** des ersten Gelenkteils **21** abgehoben, wodurch ein adäquater zweiter Freiraum **F2** entsteht, über den sich das Kabel **K** bogenförmig legt.

### Figur 17A und 17B-Tischleuchte in zweiter Stellung

Bei dieser Schrägstellung des unteren Rohrs **6** ist die Rückenpartie des Schafts **120** des zweiten Gelenkteils **12** von der Schulter des Schafts **110** des ersten Gelenkteils **11** abgehoben, wodurch ein erweiterter erster Freiraum **F1** entsteht, über den sich das abgeführte Kabel **K** erstreckt. Bei der jetzigen Schrägstellung zwischen unterem und oberem Rohr **6,7** ist die Rückenpartie des Schafts **220** des zweiten Gelenkteils **22** von der Schulter des Schafts **210** des ersten Gelenkteils **21** um abgehoben, wodurch ein verkleinerter zweiter Freiraum **F2** entsteht, über den sich das Kabel **K** auswölbt.

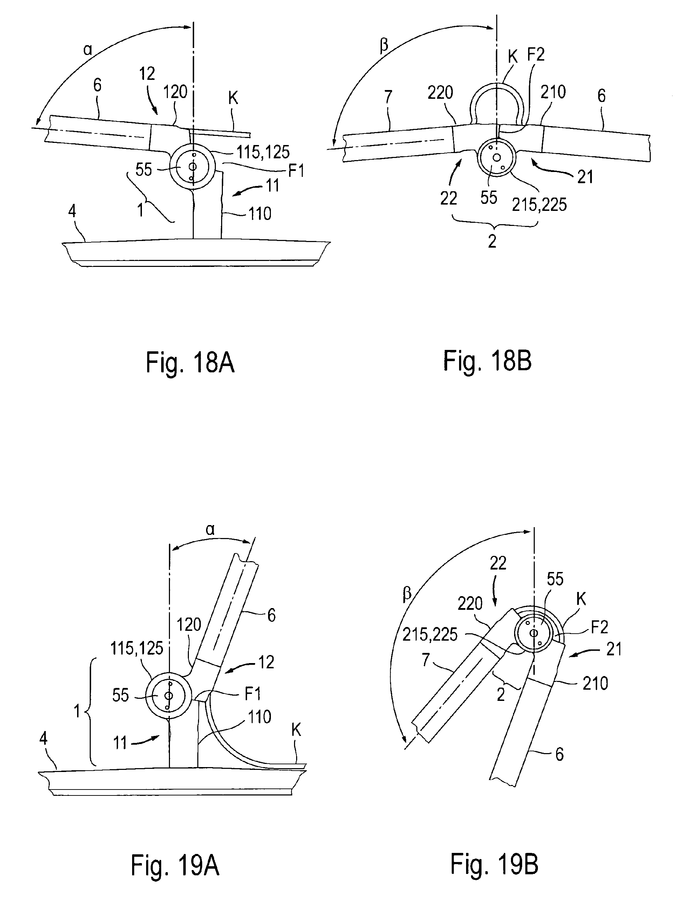

### Figur 18A und 18B - Tischleuchte in dritte Stellung

Die Rückenpartie des Schafts **120** des zweiten Gelenkteils **12** ist von der Schulter des Schafts **110** des ersten Gelenkteils **11** weiter abgehoben, wodurch ein maximaler erster Freiraum **F1** entsteht, über das abgeführte Kabel **K** verläuft. Bei der gegenwärtigen Stellung zwischen unterem und oberem Rohr **6,7** stösst die Rückenpartie des Schafts **220** des zweiten Gelenkteils **22** an die Schulter des Schafts **210** des ersten Gelenkteils **21,** wodurch der zweite Freiraum **F2** quasi Null ist, über den sich das Kabel **K** als engste Schlaufe auswölbt.

### Figur 19A und 19B - Tischleuchte in vierter Stellung

In der jetzigen hinteren Endstellung des unteren Rohrs **6** stösst die Rückenpartie des Schafts **120** des zweiten Gelenkteils **12** an die Schulter des Schafts **110** des ersten Gelenkteils **11,** wodurch der erste Freiraum **F1** quasi Null wird und das abgeführte Kabel **K** etwa senkrecht aus dem zweiten Gelenkteil **12** austritt. Bei der sehr engen Schrägstellung zwischen unterem und oberem Rohr **6,7** ist die Rückenpartie des Schafts **220** des zweiten Gelenkteils **22** von der Schulter des Schafts **210** des ersten Gelenkteils **21** weit entfernt abgehoben, wodurch ein sehr weiter zweiter Freiraum **F2** entsteht, in dem sich das Kabel **K** eng an das zweite Gelenk **2** anlegt.

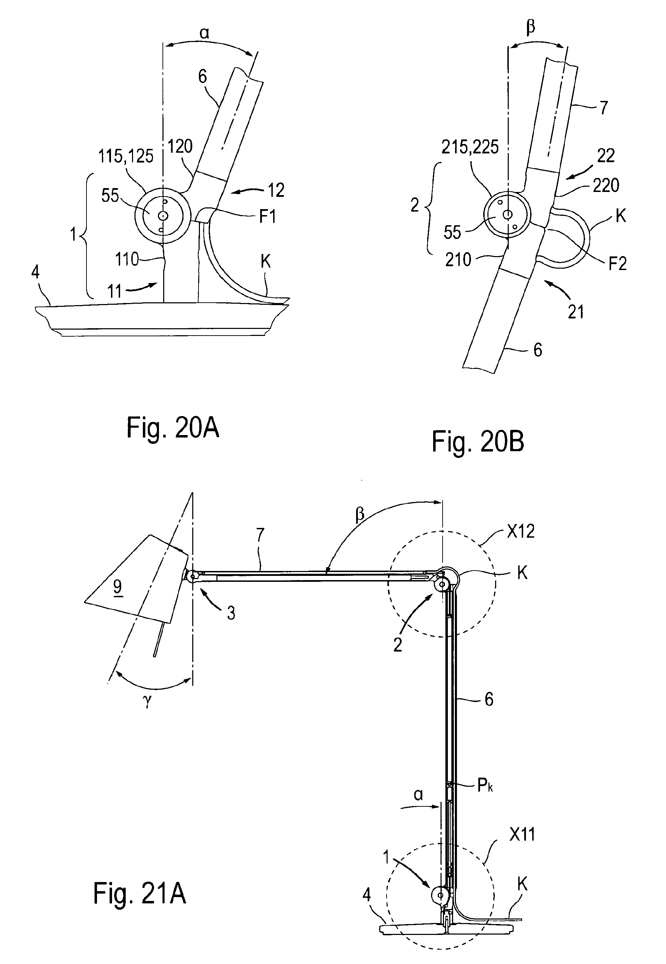

### Figur 20A und 20B - Tischleuchte in fünfter Stellung

Am ersten Gelenk **1** wiederholt sich die Stellung des vorherigen Figurenpaars. In dieser hinteren Endstellung des oberen Rohrs **7** stösst die Rückenpartie des Schafts **220** des zweiten Gelenkteils **22** an die Schulter des Schafts **210** des ersten Gelenkteils **21,** wodurch der zweite Freiraum **F2** quasi Null ist, über den sich das Kabel **K** wiederum als engste Schlaufe auswölbt.

### Figuren 21A bis 26B

In dieser abschliessenden Figurenfolge sollen die Schnitte und die daraus abgeleiteten Detailvergrösserungen die Stellung der zusammengehörigen Gelenkteile **11,12;21,22** und der Federanordnung **8** sowie den Verlauf des Kabels **K** durch die gesamte Tischleuchte illustrieren. Die Neigung des Schirms **9** um das dritte Gelenk **3** bleibt im Winkel γ unverändert und wird daher nicht erneut behandelt.

### Figuren 21A, 22A und 22B

Die Tischleuchte befindet sich in einer sechsten Stellung, in welcher der Winkel α den Wert von ca. 0° hat, so dass das untere Rohr **6** senkrecht steht. Der Winkel β beträgt ca. +90°, da das obere Rohr **7** horizontal ausgerichtet ist. Das untere Rohr **6** und das obere Rohr **7** nehmen zueinander einen nicht bezeichneten Winkel von ca. 90° ein.

Der Zapfen **40** ist im Fuss **4** teilweise eingelassen, durch eine Basisschraube **43** fest mit diesem verbunden und wird im Hohlraum **111** des senkrecht stehenden ersten Schafts **110** vom aufgesetzten ersten Gelenkteil **11** aufgenommen. Zur axialen Fixierung bei radialer Beweglichkeit dient die Transversalschraube **43,** die in eine Gewindebohrung **114** am Schaft **110** einschraubbar ist und mit ihrer Spitze in die Nut **41** am Zapfen **40** eingreift. Die Ansenkung **42** erlaubt die optisch vorteilhafte Einbettung des unteren Endes vom Schaft **110** des ersten Gelenkteils **11.** Das zweite Halteelement **862** vom zweiten Anker **86** liegt im Nest **1130** des ersten Gelenkteils **11.** Aus dem Nest **1130** erstreckt sich der Strang **860** in der Seilnut **113** hin zum Aussenumfang des Scheibensegments **115** bis zum ersten Halteelement **861,** das im lateralen Nest **851** des zweiten Endstücks **85** gelagert ist, welches im Ansatz **129** liegt. Das untere Rohr **6** nimmt in seinem ersten Kanal **61** den aus dem Schaft **120** herausragenden Abschnitt des Ansatzes **129** auf, wobei das Ende des unteren Rohrs **6** quasi fugenfrei an den Schaft **120** anstösst und die Führungsnasen **123** vom ersten Gelenkteil **11** in den zweiten Kanal **62** des unteren Rohrs **6** eingreifen. Axial aus dem zweiten Endstück **85** erstreckt sich der Stab **840,** welcher das Zwischenstück **846** und die darüber liegenden Federpakete **842** bis hinein in das erste Endstück **83** durchragt. Das axial auf dem Stab **840** beweglich angeordnete Zwischenstück **846** sitzt mit seiner Ringschulter **848** auf dem abschliessenden Kreisring des Ansatzes **129** auf. Das untere Segment **849** des Zwischenstücks **846** ragt in den Ansatz **129** hinein, während das obere Segment **847** sich gegen das benachbarte Federpaket **842** stützt. Die weiteren Federpakete **842,** welche im wesentlichen die erste Feder **84** bilden, das sich daran anschliessende erste Endstück **83,** das mit der zweiten Feder **82** verbunden ist, sowie anteilig der daran befestigte erste Anker **81** sind komplett im ersten Kanal **61** des unteren Rohrs **6** untergebracht.

Das erste Anschlussorgan **821** der zweiten Feder **82** ist mit dem zweiten Halteelement **812** vom ersten Anker **81** verbunden. Das untere Rohr **6** nimmt am oberen Ende im ersten Kanal **61** den aus dem Schaft **210** herausragenden Abschnitt des Ansatzes **219** des ersten Gelenkteils **21** vom zweiten Gelenk **2** auf, wobei das Ende des unteren Rohrs **6** ebenso quasi fugenfrei an den Schaft **210** anstösst und die Führungsnasen **213** vom ersten Gelenkteil **21** wieder in den zweiten Kanal **62** des unteren Rohrs **6** eingreifen. Der sich vom zweiten Halteelement **812** erstreckende Strang **810** wird durch den ersten Kanal **211** des ersten Gelenkteils **21** auf die in der Umfangsfläche des Scheibensegments **225** vom zweiten Gelenkteil **22** vorhandene Seilnut **223** geführt. Das erste Halteelement **811** vom ersten Anker **81** liegt im Nest **2230** des zweiten Gelenkteils **22.**

Bei den unterschiedlichen Stellungen der Tischleuchte - d.h. der Resultierenden aus dem Winkel α als Neigung von unterem Rohr **6** gegenüber dem ersten Gelenk **1,** dem Winkel β als Neigung von oberem Rohr **7** gegenüber dem zweiten Gelenk **2** und, mit geringem Einfluss, auch dem Winkel γ als Neigung des Schirms **9** gegenüber dem dritten Gelenk **3** - erzeugen die auf die Gelenke **1,2,3** überhängenden Lasten ein adäquates Drehmoment. Sofern bei der vom Benutzer gewählten momentanen Stellung der Tischleuchte durch die Lastverteilung das auf das betreffende Gelenk **1,2** wirkende Drehmoment entgegen dem Urzeigersinn gerichtet ist, wird die Tischleuchte - abgesehen von vorhandenen Reibungswiderständen zur Stabilisierung - allein durch die Federanordnung **8** in beiden Gelenken **1,2** aufgrund des sich einstellenden Gleichgewichts in verharrender Position gehalten.

Bei der senkrechten Stellung des unteren Rohrs **6** mit dem Winkel α = 0 wird der Strang **860** des zweiten Ankers **86** in der Seilnut **113** des ersten Gelenkteils **11** in einen Bogenverlauf gezwungen, so dass der Strang **860** nicht in gerader Linie über die kürzeste Verbindung verläuft. Dadurch ist der mit dem Strang **860** durch das erste Halteelement **861** und das zweite Endstück **85** am Basispunkt **P₁** verbundene Stab **840** der ersten Feder **84** näher - in Luftlinie gemessen - zum ortsfest positionierten zweiten Halteelement **862** an den Anfangspunkt **P₀** herangebracht, welcher vom in das Nest **1130** gezogenen zweiten Halteelement **862** gebildet wird. Somit ist der Stab **840** gegen die Wirkung der ersten Feder **84** weiter aus dem Zwischenstück **846** herausgezogen, wobei die Federpakete **842** über die Vorspannung hinaus durch das auf dem Ansatz **129** aufsitzende Zwischenstück **846** etwas mehr zusammengepresst werden. Äquivalent zur Lageveränderung des Basispunkts **P₁** hat sich in gleicher Richtung und im gleichen Mass der Kopplungspunkt **Pₖ** verschoben, in dem beide Federn **82,84** mit dem zwischengefügten ersten Endstück **83** miteinander verbunden sind. Zugleich hat die zweite Feder **82** eine Längendehnung in Richtung des ersten Gelenks **1** im Betrag der Verschiebung des Kopplungspunkts **Pₖ** erfahren.

Das in das Nest **2230** des zweiten Gelenkteils **22** des zweiten Gelenks **2** gezogene erste Halteelement **811** bildet den Endpunkt **P₂.** Bei der horizontalen Ausrichtung des oberen Rohrs **7** mit dem Winkel β = +90° wird der Strang **810** des ersten Ankers **81** in der Seilnut **223** des zweiten Gelenkteils **22** etwa über einen Viertelkreis in einen Bogenverlauf gezwungen, so dass der Strang **810** auch hier nicht in gerader Linie über die kürzeste Verbindung verläuft. Somit ergibt sich bei der konstanten Länge des Strangs **810** die Lage des Anschlusspunkts **Pₐ,** in welchem der erste Anker **81** mit seinem zweiten Halteelement **812** an der zweiten Feder **82** verbunden ist. Der Anschlusspunkt **Pₐ** ist - in Luftlinie gemessen - näher zum Endpunkt **P₂** herangebracht, wodurch die zweite Feder **82** auch in Richtung des zweiten Gelenks **2** zusätzlich gedehnt ist.

Das Kabel **K** zur Stromversorgung tritt am zweiten Gelenkteil **12** des ersten Gelenks **1** in die nach aussen offene Mündung seines zweiten Kanals **122** ein und setzt sich im zweiten Kanal **62** des unteren Rohrs **6** fort, um direkt von hier in den zweiten Kanal **212** des ersten Gelenkteils **21** am zweiten Gelenk **2** überzugehen. Andererseits tritt das Kabel **K** aus dem zweiten Kanal **212** bogenförmig in den bei dieser Stellung offenen zweiten Freiraum **F2** und ist in den zweiten Kanal **222** des zweiten Gelenkteils **22** eingeführt, um von hier weiter durch den zweiten Kanal **72** des oberen Rohrs **7** in den zweiten Kanal **312** des ersten Gelenkteils **31** einzutreten. Nach Durchragen der Kabelnut **313** am ersten Gelenkteil **31** tritt das Kabel **K** in den zweiten Kanal **321** am zweiten Gelenkteil **32** ein, um letztlich an der Fassung **92** zu enden.

### Figuren 21 B, 23A und 23B

Die Tischleuchte befindet sich in einer siebten Stellung, in welcher der Winkel α den Wert von ca. +50° hat, so dass das untere Rohr **6** entsprechend nach vorne geneigt ist. Der Winkel β beträgt ca. +140°, da das obere Rohr **7** deutlich nach unten geneigt ist. Das untere Rohr **6** und das obere Rohr **7** schliessen zueinander einen nicht bezeichneten Winkel von ca. 90° ein.

Bei der geneigten Stellung des unteren Rohrs **6** mit dem Winkel α ≈ +50° wird der Strang **860** des zweiten Ankers **86** in der Seilnut **113** des ersten Gelenkteils **11** in einen stärkeren Bogenverlauf gezwungen. Dadurch hat sich der Basispunkt **P₁** noch näher an den Anfangspunkt **P₀** bewegt. Somit ist der Stab **840** gegen die Wirkung der ersten Feder **84** noch weiter aus dem Zwischenstück **846** herausgezogen, so dass die Federpakete **842** durch das auf dem Ansatz **129** aufsitzende Zwischenstück **846** intensiver zusammengepresst werden. Der Lageveränderung des Basispunkts **P₁** folgte eine identische Verschiebung des Kopplungspunkts **Pₖ,** wodurch die zweite Feder **82** eine äquivalente Längendehnung zum ersten Gelenk **1** hin erfahren hat.

Bei der geneigten Ausrichtung des oberen Rohrs **7** mit dem Winkel β ≈ +140° wird der Strang **810** des ersten Ankers **81** in der Seilnut **223** des zweiten Gelenkteils **22** wieder etwa über einen Viertelkreis in einen Bogenverlauf gezwungen, so dass sich eine entsprechende Lage des Anschlusspunkts **Pₐ** einstellt, welche mit der sechsten Stellung identisch ist, da die beiden Rohre **6,7** in beiden Stellungen jeweils = 90° zueinander positioniert sind.

### Figuren 21C, 24A und 24B

Die Tischleuchte befindet sich wieder in der dritten Stellung (vgl. Figuren 1C, 18A und 18B), in welcher der Winkel α den Wert von ca. +85° hat, so dass das untere Rohr **6** entsprechend maximal nach vorne, d.h. nahezu horizontal geneigt ist. Der Winkel β beträgt ca. +95°, da das obere Rohr **7** geringfügig über die Horizontale hinaus nach unten geneigt ist. Das untere Rohr **6** und das obere Rohr **7** schliessen zueinander einen nicht bezeichneten Winkel von ca. 170° ein.

Bei der maximal geneigten Stellung des unteren Rohrs **6** mit dem Winkel α ≈ +85° wird der Strang **860** des zweiten Ankers **86** in der Seilnut **113** des ersten Gelenkteils **11** in den stärksten Bogenverlauf gezwungen. Dadurch hat sich der Basispunkt **P₁** dem Anfangspunkt **P₀ -** in Luftlinie gemessen - am nächsten angenähert. Somit ist der Stab **840** gegen die Wirkung der ersten Feder **84** am weitesten aus dem Zwischenstück **846** herausgezogen, so dass die Federpakete **842** durch das auf dem Ansatz **129** aufsitzende Zwischenstück **846** maximal zusammengepresst werden. Der Lageveränderung des Basispunkts **P₁** folgte eine identische Verschiebung des Kopplungspunkts **Pₖ,** wodurch die zweite Feder **82** zum ersten Gelenk **1** hin äquivalent, nämlich am weitesten, ausgedehnt wurde. Als Anschlagbegrenzung dient eine im zweiten Gelenkteil **12** des ersten Gelenks **1** vorhandene Bohrung **124** mit dem darin sitzenden Zapfen, dessen Spitze in die Nut **118** im ersten Gelenkteil **11** eingreift und in dieser maximalen positiven Auslenkung des unteren Rohrs **6** an dem zum Schaft **110** orientierten Ende der Nut **118** anschlägt.

Bei der geneigten Ausrichtung des oberen Rohrs **7** mit dem Winkel β ≈ +95° wird der Strang **810** des ersten Ankers **81** in der Seilnut **223** des zweiten Gelenkteils **22** nur geringfügig in einen Bogenverlauf gezwungen, so dass sich in Luftlinie die weiteste Distanz zwischen dem Endpunkt **P₂** und dem Anschlusspunkt **Pₐ** einstellt und somit die zweite Feder **82** in Richtung des zweiten Gelenks **2** am geringsten gedehnt ist.

Bei der momentanen Stellung der Rohre **6,7** ist ein Hochschwenken allein des oberen Rohrs **7** um das zweite Gelenk **2** nicht möglich, da im Urzeigersinn eine Endstellung mit Anschlagsbegrenzung erreicht ist. Diese wird durch das Anschlagen der Schulter am Schaft **210** des ersten Gelenkteils **21** an der Schulter vom Schaft **220** des zweiten Gelenkteils **22** definiert, so dass der zweite Freiraum **F2** zu Null wird.

### Figuren 21D, 25A und 25B

Die Tischleuchte befindet sich wieder in der vierten Stellung (vgl. Figuren 1D, 19A und 19B), in welcher der Winkel α den Wert von ca. -25° hat, so dass das untere Rohr **6** nach hinten geneigt ist und hier am Anschlag steht. Der Winkel β beträgt ca. +140°, wobei das obere Rohr **7** maximal nach unten geneigt ist und auch hier auf einen Anschlag trifft. Das untere Rohr **6** und das obere Rohr **7** schliessen zueinander einen nicht bezeichneten Winkel von ca. 20° ein, so dass beide Rohre **6,7** am engsten zueinander positioniert sind.

Bei der geneigten Stellung des unteren Rohrs **6** mit dem Winkel α = -20° wird der Strang **860** des zweiten Ankers **86** in der Seilnut **113** des ersten Gelenkteils **11** nur tangential durchgeführt, also in keinen Bogenverlauf gezwungen. Dadurch hat sich der Basispunkt **P₁ -** in Luftlinie betrachtet - am nächsten an den Anfangspunkt **P₀** bewegt. Somit ist der Stab **840** gegen die Wirkung der ersten Feder **84** quasi nur im Masse einer gewählten Vorspannung geringfügig aus dem Zwischenstück **846** herausgezogen. Die Federpakete **842** sind durch das auf dem Ansatz **129** aufsitzende Zwischenstück **846** nur wenig zusammengepresst. Zur Lage des Basispunkts **P₁** stellt sich eine zugehörige Position des Kopplungspunkts **Pₖ** ein, wodurch die zweite Feder **82** eine äquivalente Längendehnung zum ersten Gelenk **1** hin erfahren hat, wodurch die zweite Feder **82** zum ersten Gelenk **1** hin am geringsten ausgedehnt wurde. Die hintere Endstellung des unteren Rohrs **6** wird durch das Aufsitzen der unteren Schulter am Schaft **120** des zweiten Gelenkteils **12** auf der oberen Schulter vom Schaft **110** des ersten Gelenkteils **11** definiert, so dass der erste Freiraum **F1** zu Null wird.

Bei der geneigten Ausrichtung des oberen Rohrs **7** mit dem Winkel β ≈ +140° wird der Strang **810** des ersten Ankers **81** in der Seilnut **223** des zweiten Gelenkteils **22** etwa über einen Halbkreis in einen Bogenverlauf gezwungen, so dass sich - in Luftlinie betrachtet - ein enger Abstand zwischen dem Endpunkt **P₂** und dem Anschlusspunkts **Pₐ** einstellt, wodurch die zweite Feder **82** eine maximale Längendehnung zum zweiten Gelenk 2 hin erfahren hat.

### Figuren 21 E, 26A und 26B

Die Tischleuchte befindet sich wieder in der fünften Stellung (vgl. Figuren 1E, 20A und 20B), in welcher der Winkel α den Wert von ca. -20° hat, so dass das untere Rohr **6** nach hinten geneigt ist und hier am Anschlag steht. Der Winkel β beträgt ca. -10°, wobei das obere Rohr **7** maximal nach unten geneigt ist und auch hier auf einen Anschlag trifft. Das untere Rohr **6** und das obere Rohr **7** schliessen zueinander einen nicht bezeichneten Winkel von ca. 170° ein, so dass beide Rohre **6,7** fast zueinander fluchten, der zweiteilige Arm quasi senkrecht zur Tischoberfläche steht und der Schirm **9** am höchsten über der Tischoberfläche positioniert ist.

Die Lage des Basispunkts **P₁** und des Kopplungspunkts **Pₖ** mit dem Spannungszustand an der ersten Feder **84** und dem Dehnungsweg der zweiten Feder **82** hin zum ersten Gelenk **1** sind zur vorangehenden vierten Stellung (vgl. Figuren 1D, 19A und 19B) identisch.

Bei der nahezu senkrechten Ausrichtung des oberen Rohrs **7** mit dem Winkel β = -10° wird der Strang **810** des ersten Ankers **81** in der Seilnut **223** des zweiten Gelenkteils **22** nur geringfügig in einen Bogenverlauf gezwungen, so dass sich in Luftlinie die weiteste Distanz zwischen dem Endpunkt **P₂** und dem Anschlusspunkt **Pₐ** einstellt und somit die zweite Feder **82** in Richtung des zweiten Gelenks **2** am geringsten gedehnt ist. Da sich beide Rohre **6,7** in der hinteren Endstellung am jeweiligen Anschlag befinden, kann weder das untere Rohr um das erste Gelenk **1** noch das obere Rohr **7** um das zweite Gelenk **2** weiter nach hinten geschwenkt werden, so dass beide Freiräume **F1,F2** Null sind.

## Patentansprüche

1. Leuchte mit einem einstellbaren Arm, der aus einem unteren und einem oberen Rohr (**6,7**) besteht und in dem eine Federanordnung (**8**) integriert ist, welche den Arm in Balance hält, ferner aufweisend:
a) ein erstes Gelenk (**1**), das zwischen einem Fuss (**4**) und dem unteren Rohr (**6**) angeordnet ist, welches über einen ersten Winkel (α) verstellbar ist, wobei das erste Gelenk (**1**):
aa) ein erstes Gelenkteil (**11**) hat, das mit dem Fuss (**4**) verbunden ist;
ab) ein zweites Gelenkteil (**12**) hat, das mit dem unteren Rohr (**6**) verbunden ist, und beide Gelenkteile (**11,12**) ineinander greifen;
b) ein zweites Gelenk (**2**), das zwischen dem unteren Rohr (**6**) und dem oberen Rohr (**7**) angeordnet ist, welches über einen zweiten Winkel (β) verstellbar ist, wobei das zweite Gelenk (**2**):
ba) ein erstes Gelenkteil (**21**) hat, das mit dem unteren Rohr (**6**) verbunden ist;
bb) ein zweites Gelenkteil (**22**) hat, das mit dem oberen Rohr (**7**) verbunden ist, und beide Gelenkteile (**21,22**) ineinander greifen;
c) eine Fassung (**92**) zur Aufnahme eines Leuchtkörpers (**93**), die mit dem oberen Rohr (**7**) verbunden ist;
d) ein Stromkabel (**K**), das von aussen über die Rohre (**6,7**) an die Fassung **(92)** herangeführt ist, **dadurch gekennzeichnet, dass**
e) die Federanordnung (**8**) aus einer ersten Feder (**84**) mit einer ersten Federkonstanten und einer mit der ersten Feder (**84**) in Reihe geschalteten zweiten Feder (**82**) mit einer zweiten Federkonstanten besteht;
f) die erste Federkonstante wesentlich grösser als die zweite Federkonstante ist;
g) beide Federn (**84,82**) in einem ersten Kanal (**61**) des unteren Rohrs (**6**) untergebracht sind;
h) ein zweites Halteelement (**862**), welches das auf Seiten der ersten Feder (**84**) liegende freie Ende der Federanordnung (**8**) bildet, in einem im ersten Gelenkteil (**11**) des ersten Gelenks (**1**) vorhandenen Anfangspunkt (**P₀**) arretiert ist; und
i) ein erstes Halteelement (**811**), welches das auf Seiten der zweiten Feder (**82**) liegende freie Ende der Federanordnung (**8**) bildet, in einem im zweiten Gelenkteil (**22**) des zweiten Gelenks (**2**) vorhandenen Endpunkt (**P₂**) arretiert ist.

2. Leuchte nach Anspruch 1, **dadurch gekennzeichnet, dass**
a) die erste Feder (**84**) aus einer Vielzahl von auf einem Achsstab (**840**) aneinander gereihten, axial komprimierbaren Tellerfedern gebildet wird;
b) die zweite Feder (**82**) eine Spiralfeder ist, welche in einem Kopplungspunkt (**Pₖ**) mit der ersten Feder (**84**) verbunden ist; und
c) das Stromkabel (**K**) in einem zweiten Kanal (**62,72**) des unteren Rohrs (**6**) und des oberen Rohrs (**7**) untergebracht verläuft.

3. Leuchte nach zumindest einem der Ansprüche 1 und 2, **dadurch gekennzeichnet, dass**
a) die erste Feder (**84**):
aa) durch auf dem Achsstab (**840**) eingefügte, axial bewegliche Scheiben (**841**) in Pakete (**842**) gegliedert sein kann;
ab) ein am zweiten Gelenkteil (**12**) des ersten Gelenks (**1**) aufsetzendes Zwischenstück (**846**) hat, das axial beweglich auf dem Achsstab (**840**), an dem Ende der ersten Feder (**84**) angeordnet ist, welches dem zweiten Halteelement (**862**) zugewandt ist;
ac) auf Seiten des Zwischenstücks (**846**) der Achsstab (**840**) in ein zweites Endstück (**85**) übergeht;
ad) sich vom zweiten Endstück (**85**) ein zweiter Anker (**86**) erstreckt, der mit dem zweiten Halteelement (**862**) endet;
ae) gegenüber dem Zwischenstück (**846**) der Achsstab (**840**) in ein erstes Endstück (**83**) übergeht, das ein Anschlussorgan (**831**) besitzt;
b) die zweite Feder (**82**):
ba) mit ihrem zweiten Anschlussorgan (**822**) am Kopplungspunkt (**Pₖ**) mit einem Anschlussorgan (**831**) der ersten Feder (**84**) verbunden ist; und
bb) gegenüber dem zweiten Anschlussorgan (**822**) ein erstes Anschlussorgan (**821**) besitzt, von dem sich ein erster Anker (**81**) erstreckt, der mit dem ersten Halteelement (**811**) endet.

4. Leuchte nach zumindest einem der Ansprüche 1 bis 3, **dadurch gekennzeichnet, dass**
a) die beiden Anker (**81,86**) im wesentlichen jeweils aus einem flexiblen Strang (**810,860**), vorzugsweise ein Stahlseil, bestehen;
b) das erste Halteelement (**811**) des ersten Ankers (**81**) und das zweite Halteelement (**862**) des zweiten Ankers (**86**) kugelförmig sind;
c) der erste Anker (**81**) gegenüber seinem ersten Halteelement (**811**) ein zweites Halteelement (**812**) mit einem Durchgangsloch (**813**) besitzt, in welches das erste Anschlussorgan (**821**) der zweiten Feder (**82**) eingehängt ist;
d) der zweite Anker (**86**) gegenüber seinem zweiten Halteelement (**862**) ein kugelförmiges erstes Halteelement (**861**) besitzt, welches in ein lateral mündendes Nest (**851**) des zweiten Endstücks (**85**) eingehängt ist;
e) das Anschlussorgan (**831**) an der ersten Feder (**84**) ösenförmig ist, in welches das hakenförmige zweite Anschlussorgan (**822**) der zweiten Feder (**82**) eingehängt ist; und
f) der Anfangspunkt (**P₀**) im ersten Gelenkteil (**11**) des ersten Gelenks (**1**) und der Endpunkt (**P₂**) im zweiten Gelenkteil (**22**) des zweiten Gelenks (**2**) jeweils als Nest (**1130,2230**) zur einhängbaren, arretierten Aufnahme des zweiten Halteelements (**862**) des zweiten Ankers (**86**) bzw. des ersten Halteelements (**811**) des ersten Ankers (**81**) ausgebildet sind.

5. Leuchte nach zumindest einem der Ansprüche 1 bis 4, **dadurch gekennzeichnet, dass**
a) das erste Gelenkteil (**11**) des ersten Gelenks (**1**) einen Schaft (**110**) und ein daran ansetzendes Scheibensegment (**115**) aufweist, wobei:
aa) der Schaft (**110**) einen axial mündenden Hohlraum (**111**) und das lateral mündende Nest (**1130**) hat;
ab) das Scheibensegment (**115**) eine radial verlaufende Seilnut (**113**) hat, die zur längenveränderlichen Aufnahme des Strangs (**860**) des zweiten Ankers (**86**) dient und sich bis in den Schaft (**110**) hinein zum Nest (**1130**) erstreckt;
ac) das Scheibensegment (**115**) ferner ein zentrisches Durchgangsloch (**116**) hat;
b) das zweite Gelenkteil (**12**) des ersten Gelenks (**1**) einen Schaft (**120**) und zwei daran ansetzende Scheibensegmente (**125**) aufweist, die zueinander kongruent stehen und zwischen sich einen Freiraum (**128**) belassen, wobei:
ba) durch den Schaft (**120**) ein erster Kanal (**121**) und ein zweiter Kanal (**122**) verlaufen;
bb) den Scheibensegmenten (**125**) gegenüberliegend aus dem ersten Kanal (**121**) ein rohrförmiger Ansatz (**129**) herausragt, in welchem sich der erste Kanal (**121**) fortsetzt;
bc) durch die Scheibensegmente (**125**) ein zentrisches Durchgangsloch (**126**) verläuft;
c) das erste Gelenkteil (**11**) mit seinem Hohlraum (**111**) auf einem vom Fuss (**4**) aufragenden Zapfen (**40**) drehbeweglich steckt;
d) das Scheibensegment (**115**) des ersten Gelenkteils (**11**) im Freiraum (**128**) zwischen den beiden Scheibensegmenten (**125**) des zweiten Gelenkteils (**12**) steckt; und
e) beide Gelenkteile (**11,12**) mittels einer die Durchgangslöcher (**116,126**) durchragenden Schraube (**5**) und zugehöriger Mutter (**55**) miteinander beweglich verbunden sind.

6. Leuchte nach zumindest einem der Ansprüche 1 bis 5, **dadurch gekennzeichnet, dass**
a) das Scheibensegment (**115**) des ersten Gelenkteils (**11**) vom ersten Gelenk (**1**) beidseits um das Durchgangsloch (**116**) herum eine Vertiefung (**117**) hat;
b) einerseits des Scheibensegments (**115**) eine bogenförmig verlaufende Nut (**118**) vorhanden ist;
c) der aus dem Schaft (**120**) vom zweiten Gelenkteil (**12**) herausragende Ansatz (**129**) im ersten Kanal (**61**) des unteren Rohrs (**6**) steckt;
d) die Scheibensegmente (**125**) des zweiten Gelenkteils (**12**) vom ersten Gelenk (**1**) jeweils aussen, um das Durchgangsloch (**126**) herum, eine Vertiefung (**127**) haben, in denen einerseits ein Kopf (**50**) der Schraube (**5**) und andererseits ein Scheibensegment (**56**) der Mutter (**55**) versenkt ist;
e) in einem der Scheibensegmente (**125**) des zweiten Gelenkteils (**12**) eine Bohrung (**124**) vorhanden ist, um darin ein Arretierelement aufzunehmen, das in die Nut (**118**) am ersten Gelenkteil (**11**) die Vorwärtsneigung des unteren Rohrs (**6**) begrenzend eingreift;
f) die Rückwärtsneigung des unteren Rohrs (**6**) durch das Aufsitzen einer Schulterfläche am Schaft (**120**) des zweiten Gelenkteils (**12**) des ersten Gelenks (**1**) auf einer Schulterfläche am Schaft (**110**) des ersten Gelenkteils (**11**) des ersten Gelenks (**1**) begrenzt wird;
g) im ersten Kanal (**121**) des zweiten Gelenkteils (**12**) das zweite Endstück (**85**) der Federanordnung (**8**) positionsveränderlich liegt und in seinem zweiten Kanal (**122**) das Stromkabel (**K**) verläuft; und
h) das Zwischenstück (**846**) der Federanordnung (**8**) auf der im ersten Kanal (**61**) des unteren Rohrs (**6**) befindlichen Ringschulter des Ansatzes (**129**) aufsitzt.

7. Leuchte nach zumindest einem der Ansprüche 1 bis 6, **dadurch gekennzeichnet, dass**
a) das erste Gelenkteil (**21**) des zweiten Gelenks (**2**) einen Schaft (**210**) und zwei daran ansetzende Scheibensegmente (**215**) aufweist, die zueinander kongruent stehen und zwischen sich einen Freiraum (**218**) belassen, wobei:
aa) durch den Schaft (**210**) ein erster Kanal (**211**) und ein zweiter Kanal (**212**) verlaufen;
ab) den Scheibensegmenten (**215**) gegenüberliegend aus dem ersten Kanal (**211**) ein rohrförmiger Ansatz (**219**) herausragt, in welchem sich der erste Kanal (**211**) fortsetzt;
ac) durch die Scheibensegmente (**215**) ein zentrisches Durchgangsloch (**216**) verläuft;
b) das zweite Gelenkteil (**22**) des zweiten Gelenks (**2**) einen Schaft (**220**) und ein daran ansetzendes Scheibensegment (**225**) aufweist, wobei:
ba) der Schaft (**220**) das lateral mündende Nest (**2230**) und einen zweiten Kanal (**222**) hat;
bb) das Scheibensegment (**225**) eine radial verlaufende Seilnut (**223**) hat, die zur längenveränderlichen Aufnahme des Strangs (**810**) des ersten Ankers (**81**) dient und sich bis in den Schaft (**220**) hinein zum Nest (**2230**) erstreckt; und
bc) das Scheibensegment (**225**) ferner ein zentrisches Durchgangsloch (**226**) hat;
c) das Scheibensegment (**225**) des zweiten Gelenkteils (**22**) im Freiraum (**218**) zwischen den beiden Scheibensegmenten (**215**) des ersten Gelenkteils (**21**) steckt; und
d) beide Gelenkteile (**21,22**) mittels einer die Durchgangslöcher (**216,226**) durchragenden Schraube (**5**) und zugehöriger Mutter (**55**) miteinander beweglich verbunden sind.

8. Leuchte nach zumindest einem der Ansprüche 1 bis 7, **dadurch gekennzeichnet, dass**
a) das Scheibensegment (**225**) des zweiten Gelenkteils (**22**) vom zweiten Gelenk (**2**) beidseits um das Durchgangsloch (**226**) herum eine Vertiefung (**227**) hat;
b) einerseits des Scheibensegments (**225**) eine bogenförmig verlaufende Nut (**228**) vorhanden ist;
c) der aus dem Schaft (**220**) vom zweiten Gelenkteil (**22**) herausragende Ansatz (**229**) im ersten Kanal (**71**) des oberen Rohrs (**7**) steckt;
d) die Scheibensegmente (**215**) des ersten Gelenkteils (**21**) vom zweiten Gelenk (**2**) jeweils aussen, um das Durchgangsloch (**216**) herum, eine Vertiefung (**217**) haben, in denen einerseits ein Kopf (**50**) der Schraube (**5**) und andererseits ein Scheibensegment (**56**) der Mutter (**55**) versenkt ist;
e) in einem der Scheibensegmente (**215**) des ersten Gelenkteils (**21**) eine Bohrung (**214**) vorhanden ist, um darin ein Arretierelement aufzunehmen, das in die Nut (**228**) am zweiten Gelenkteil (**22**) die Vorwärtsneigung des oberen Rohrs (**7**) begrenzend eingreift;
f) die Rückwärtsneigung des oberen Rohrs (**7**) durch das Aufsitzen einer Schulterfläche am Schaft (**220**) des zweiten Gelenkteils (**22**) des zweiten Gelenks (**2**) auf einer Schulterfläche am Schaft (**210**) des ersten Gelenkteils (**21**) des zweiten Gelenks (**2**) begrenzt wird; und
g) im ersten Kanal (**211**) des ersten Gelenkteils (**21**) der Strang (**810**) des ersten Ankers (**81**) positionsveränderlich liegt und in seinem zweiten Kanal (**212**) das Stromkabel (**K**) verläuft, das sich über den zweiten Kanal (**222**) des zweiten Gelenkteils (**22**) und den zweiten Kanal (**72**) des oberen Rohrs (**7**) fortsetzt.

9. Leuchte nach zumindest einem der Ansprüche 1 bis 8, **dadurch gekennzeichnet, dass**
a) ein drittes Gelenk (**3**) zwischen dem oberen Rohr (**7**) und der Fassung (**92**) angeordnet ist, wobei:
b) das dritte Gelenk (**3**) ein erstes Gelenkteil (**31**) hat, welches mit dem oberen Rohr (**7**) verbunden ist, und ein zweites Gelenkteil (**32**) hat, welches mit der Fassung (**92**) verbunden ist; und
c) die Fassung (**92**) von einem Schirm (**9**) umgeben ist, der über einen Neigungswinkel (γ) und in Rotationsrichtung verstellbar ist.

10. Leuchte nach zumindest einem der Ansprüche 1 bis 9, **dadurch gekennzeichnet, dass**
a) das erste Gelenkteil (**31**) des dritten Gelenks (**3**) einen Schaft (**310**) und zwei daran ansetzende Scheibensegmente (**315**) aufweist, die zueinander kongruent stehen und zwischen sich eine Kabelnut (**313**) belassen, wobei:
aa) der Schaft (**310**) einen zweiten Kanal (**312**) hat;
ab) den Scheibensegmenten (**315**) gegenüberliegend sich der Schaft (**310**) mit einem axial erstreckenden rohrförmiger Ansatz (**319**) fortsetzt;
ac) durch die Scheibensegmente (**315**) ein zentrisches Durchgangsloch (**316**) verläuft;
ad) die Scheibensegmente (**315**) des ersten Gelenkteils (**31**) vom dritten Gelenk (**3**) jeweils aussen, um das Durchgangsloch (**316**) herum, eine Vertiefung (**317**) haben;
b) das zweite Gelenkteil (**32**) des dritten Gelenks (**3**) einen Schaft (**320**) und zwei daran ansetzende Scheibensegmente (**325**) aufweist, die zueinander kongruent stehen und zwischen sich einen Freiraum (**328**) belassen, wobei:
ba) der Schaft (**320**) einen zweiten Kanal (**321**) hat;
bb) den Scheibensegmenten (**325**) gegenüberliegend sich der Schaft (**320**) mit einem axial erstreckenden rohrförmigen Ansatz (**329**) fortsetzt;
bc) durch die Scheibensegmente (**325**) ein zentrisches Durchgangsloch (**326**) verläuft; und
bd) die Scheibensegmente (**325**) des zweiten Gelenkteils (**32**) vom dritten Gelenk (**3**) jeweils aussen, um das Durchgangsloch (**326**) herum, eine Vertiefung (**327**) haben.

11. Leuchte nach zumindest einem der Ansprüche 1 bis 10, **dadurch gekennzeichnet, dass**
a) die Scheibensegmente (**315**) des ersten Gelenkteils (**31**) vom dritten Gelenk (**3**) im Freiraum (**328**) zwischen den beiden Scheibensegmenten (**325**) des zweiten Gelenkteils (**32**) stecken;
b) beide Gelenkteile (**31,32**) mittels einer die Durchgangslöcher (**316,326**) durchragenden Schraube (**5**) und zugehöriger Mutter (**55**) miteinander beweglich verbunden sind;
c) in den Vertiefungen (**327**) an den Scheibensegmenten (**325**) des zweiten Gelenkteils (**32**) vom dritten Gelenk (**3**) einerseits ein Kopf (**50**) der Schraube (**5**) und andererseits ein Scheibensegment (56) der Mutter (**55**) versenkt ist;
d) im zweiten Kanal (**312**) des ersten Gelenkteils (**31**) das Stromkabel (**K**) verläuft, die Kabelnut (**313**) und den Freiraum (**328**) durchragt und sich über den zweiten Kanal (**321**) des zweiten Gelenkteils (**32**) fortsetzt; und
e) am dritten Gelenk (**3**) zur Begrenzung der Verstellung der Fassung (**92**) in Rotationsrichtung eine Arretierkontur (**3290**) vorhanden ist.

12. Leuchte nach zumindest einem der Ansprüche 1 bis 11, **dadurch gekennzeichnet, dass**
a) die Scheibensegmente (**215,225**) der beiden Gelenkteile (**21,22**) des zweiten Gelenks (**2**) im Verhältnis zu den Scheibensegmenten (**115,125**) der beiden Gelenkteile (**11,12**) des ersten Gelenks (**1**) einen verminderten Durchmesser haben; und
b) die beiden den Arm der Leuchte bildenden Rohre (**6,7**) eine gemeinsame Ebene aufspannen.
